# EUROPEAN PATENT APPLICATION

(11) **EP 0 996 061 A2**
(43) Date of publication of application: **26.04.2000**
(21) Application number: 99303911.4
(22) Date of filing: 20.05.1999
(51) Int. Cl.: G06F 11/14

(54) **Error handling method**

(30) Priority: 20.10.1998 JP 29805998
(71) Applicant: FUJITSU LIMITED, Kawasaki-shi, Kanagawa 211-8588 (JP)
(72) Inventor: Kawasaki, Makoto c/o Fujitsu Limited, Kawasaki-shi, Kanagawa 211-8588 (JP); Iwasa, Naoki c/o Fujitsu Limited, Kawasaki-shi, Kanagawa 211-8588 (JP); Harada, Yoshihisa c/o Fujitsu Limited, Kawasaki-shi, Kanagawa 211-8588 (JP); Kimura, Teruhiko c/o Fujitsu Limited, Kawasaki-shi, Kanagawa 211-8588 (JP); Koizumi, Hiromi c/o Fujitsu Limited, Kawasaki-shi, Kanagawa 211-8588 (JP)
(74) Representative: Hitching, Peter Matthew

(57) **Abstract**

In an error handling technique, for use in an information processing system to deal with an error, the error is detected and analysed through a power on self test (22), and in accordance with this detection, a setup screen for changing the contents to be changed for elimination of that error is displayed on a displaying section (15a) of a computer system.

In this way, when an error occurs, the user can easily specify a factor (matters to be changed) in the occurrence of the error to quickly and properly eliminate that error. The technique is applicable in dealing with the error detected through the power on self test (22) in an information processing system having a setup function based upon, for example, a basic input output program (BIOS).

## Description

The present invention relates to, in an information processing system having a setup function based upon, for example, a basic input output program(BIOS: Basic Input Output System), a method of coping with (handling) errors detected through a power on self test (POST), and to an information processing system, a control unit and a program-stored computer readable record medium each of which involves the application of this method.

In general, in an information processing system, for example, in a computer system such as a personal computer, a basic input output program(which will be referred hereinafter to as a BIOS) is stored in a ROM to control various types of hardware (input/output units or peripheral devices) such as a keyboard, a display, a floppy disk drive (FDD) and a hard disk drive (HDD).

In addition, at power-on or restarting of the computer system, a power on self test (which will be referred hereinafter to as a POST) automatically checks all the devices including a memory, a CPU, an FDD, an HDD and others in the computer system concurrently with checking configurations (environmental settings: settings of the date/time, a serial port, a parallel port, a sound device, a power-saving mode and others) in the computer system.

If the POST detects the occurrence of some error (which will sometimes be referred hereinafter to as a POST error), the computer system puts an error message dependent on that error on the display and stands by for an operation/instruction from an operator who refers to that error message. Referring to the error message on the display, the operator conducts processing in accordance with that error message.

If the POST error results from hardware, the operator deals with this POST error by repairing the relevant hardware. On the other hand, if the POST error is eliminable by the modification of the configuration settings, the operator uses a BIOS setup function (a program for the configurations in a computer system) to call up a BIOS setup item corresponding to the POST error onto the display, and alters the settings of the matter causing the occurrence of the POST error while referring to the display.

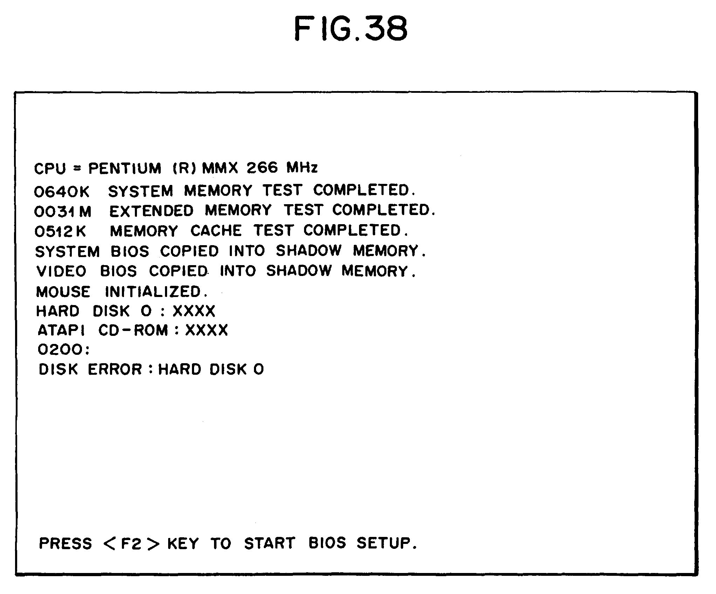

Referring here to FIGs. 38 to 45, a description will be made of a concrete example of the occurrence of the POST error correctable by the modification of the configuration settings and a correcting procedure of the POST error.

An example of a POST error which is eliminable by the BIOS setup function is one which occurs when the user (operator) sets HDD parameters or the system date in the configuration settings incorrectly. A more detailed description will be given hereinbelow of these POST errors and subsequent correcting procedures thereof.

Let it be assumed that, in a computer system, there is a "CUSTOMIZED" setting where appropriate values (natural numbers) are set which express the types and sizes (the number of cylinders) constituting the HDD parameters. In such a computer system, when the BIOS setup is booted up the HDD handles a zero-size HDD setting as an error, such that default data is loaded and the type setting condition is returned from "CUSTOMIZED" to "AUTO". When "AUTO" is selected as the type, the type of a device is automatically recognized at starting (boot), and when "CUSTOMIZED" is selected as the type, the user can set the items including the number of cylinders, the number of heads and the number of sectors.

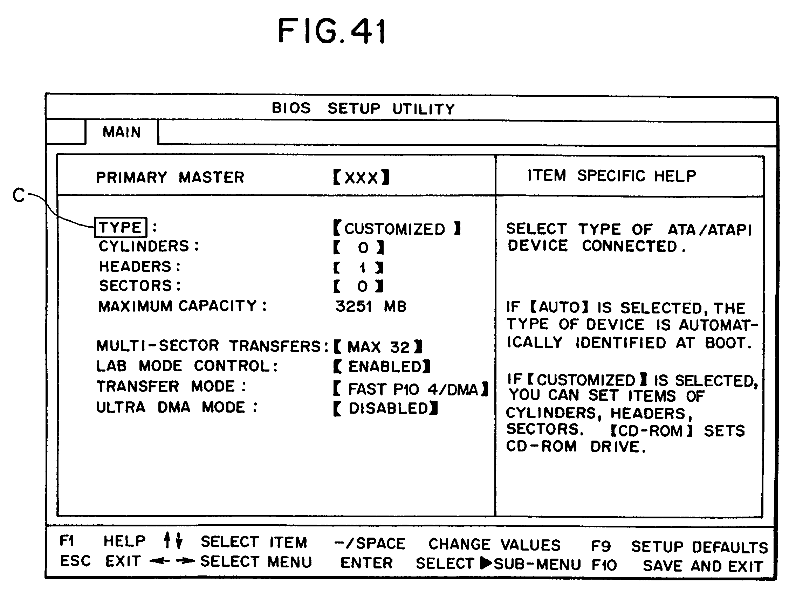

Furthermore, let it be assumed that the user notices the type has returned to "AUTO" when referring to a setup screen or frame, for example, shown in FIG. 41, and changes the type from "AUTO" to "CUSTOMIZED". With the type set to the "CUSTOMIZED", zero(being a minimum value)is automatically set as the size (the number of cylinders). Incidentally, with the type set to "AUTO", the size items "CYLINDERS", "HEADERS" and "SECTORS" are displayed at a low luminance on the screen.

At this time, if the user fails to change a size from zero to an appropriate value and restarts the computer system, the HDD handles the zero size setting as an error. Hence a POST error takes place, whereby the BIOS makes a self diagnostic or test screen such as that shown in FIG. 38 appears, and subsequently stands by for an input through a key manipulation by the user. In this self diagnostic screen shown in FIG. 38, the fact (an error message) of the occurrence of a POST error on a code "0200" of a hard disk 0 is indicated as an error diagnosis result.

When seeing such a POST error diagnosis result, because of the impracticality of the direct use of the HDD, the user realizes the necessity to press the F2 key to advance to a BIOS setup in order to make changes to the configuration of the HDD parameters.

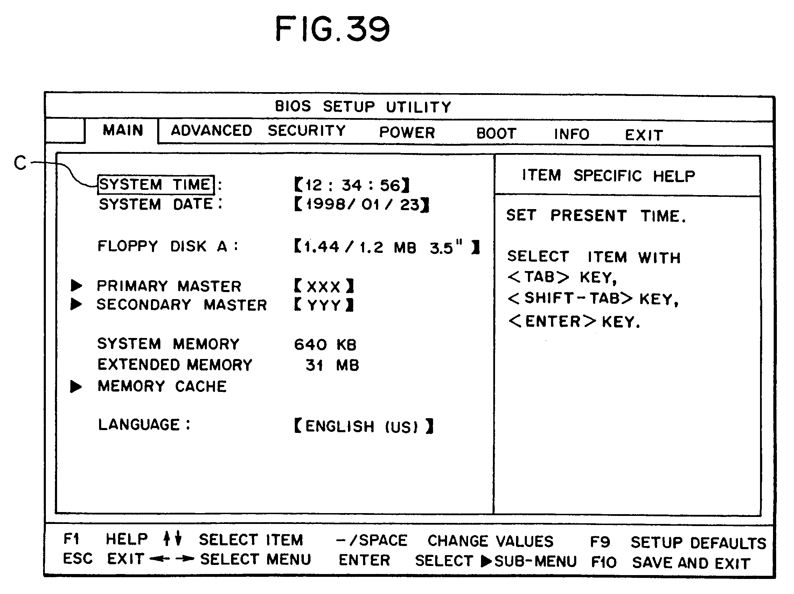

More specifically, the user refers to the self diagnostic screen shown in FIG. 38 and presses the F2 key to make a main menu screen for the BIOS setup appear as shown in FIG. 39. At this time, if the user presses the F2 key on the self diagnostic screen shown in FIG. 38, the screen of a displaying section immediately switches from the self diagnostic screen to the main menu screen for the BIOS setup shown in FIG. 39.

As shown in FIG. 39, in the main menu screen, there are displayed a plurality of setup items such as "SYSTEM TIME", "SYSTEM DATE", "FLOPPY DISK A", "PRIMARY MASTER", "SECONDARY MASTER", "SYSTEM MEMORY", "EXTENDED MEMORY" and "LANGUAGE". Immediately after the switching of the displaying state to the main menu screen, a cursor C for selecting the setup item is at the uppermost setup item "SYSTEM TIME" as shown in Fig. 39. In practice, the cursor C is indicated by inverting a rectangular area surrounding the setup item "SYSTEM TIME". This cursor C is movable up and down by operations of a "1 " key and a "1 " key, and the setup items are selected with the positions of the cursor C. In addition, an item specific help is also indicated in the main menu screen. In this item specific help column, indicated is help information about the setup item at which the cursor C exists. Thus, since the cursor C is positioned at the "SYSTEM TIME" in the main menu shown in FIG. 39, the help information "SET PRESENT TIME. SELECT ITEM WITH 〈TAB〉 KEY, 〈SHIFT-TAB〉 KEY, 〈ENTER〉 KEY." corresponding to this "SYSTEM TIME" appears in the item specific column.

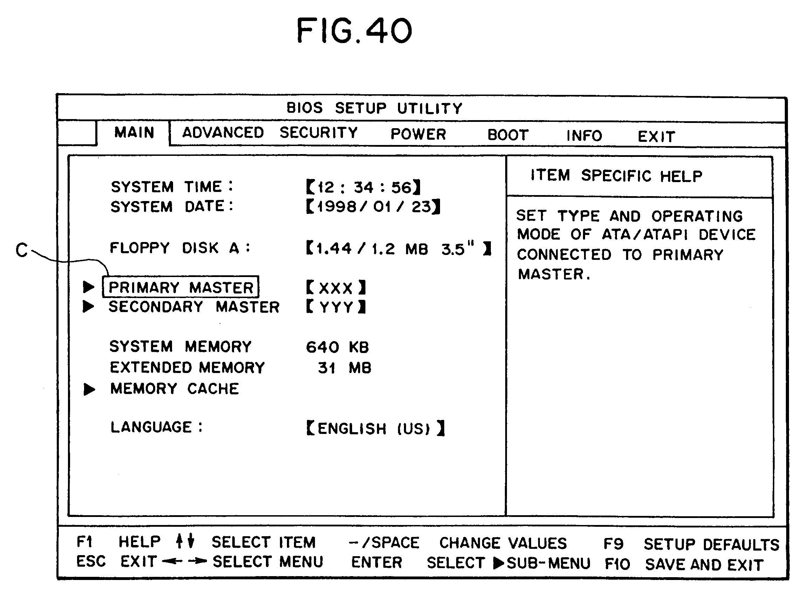

Meanwhile, when the main menu screen for the BIOS setup is displayed as shown in FIG. 39, the user presses the "↓" key to move the cursor C up to the position of the "PRIMARY MASTER" of the hard disk 0 as shown in FIG. 40 and subsequently presses the "ENTER" key to select the setup item "PRIMARY MASTER". Whereupon, the screen on the displaying section switches from the main menu screen shown in FIG. 40 to a primary master menu screen shown in FIG. 41. Incidentally, in the item specific help column on the screen shown in FIG. 40, there appears the help information "SET TYPE AND OPERATING MODE OF ATA/ATAPI CONNECTED TO PRIMARY MASTER." corresponding to "PRIMARY MASTER" where the cursor C exists.

In the primary master menu screen, as shown in FIG. 41, there are displayed a plurality of setup items "TYPE", "CYLINDERS", "HEADERS", "SECTORS", "MAXIMUM CAPACITY", "MULTI-SECTOR TRANSFERS", "LAB MODE CONTROL", "TRANSFER MODE" and "ULTRA DMA MODE". Immediately after the switching of the displaying state to the primary master menu screen, the cursor C for the selection of the setup items is at the uppermost setup item "Type". Actually, the cursor C is indicated by inverting a rectangular area surrounding the setup item "TYPE". This cursor C is movable upwardly and downwardly by operations of the "↑" key and the "↓" key, while the position of the cursor C allows the selection of the corresponding setup items. In addition, the item help also appears in the primary master menu screen, and the help information (see FIG. 41) about the setup item "TYPE" where the cursor C exists comes on in the item help column.

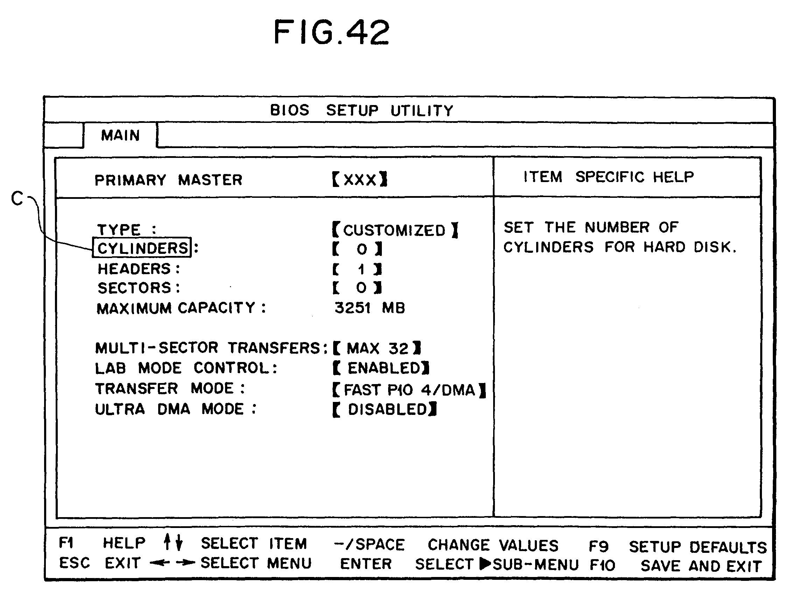

Furthermore, with the primary master menu screen shown in FIG. 41 displayed, the user presses the "↓" key to move the cursor C to the position of the "CYLINDERS" as shown in FIG. 42, and then operates a "-/Space" key to alter the numeral within a numeral displaying section "[0]" indicated on the right side of the item "CYLINDERS". Whereupon, the number of cylinders is changed and set to a predetermined value, so that a POST error originating from the error configuration of the HDD parameter (the number of cylinders) is eliminable. Incidentally, the help information "SET THE NUMBER OF CYLINDERS FOR HARD DISK." corresponding to the "CYLINDERS" at which the cursor C lies is displayed in the item specific help column of the screen shown in FIG. 42.

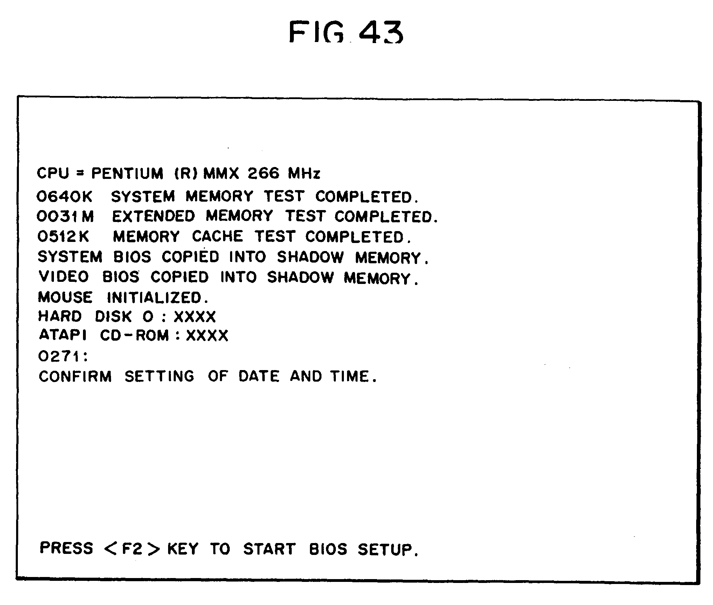

Meanwhile, on the BIOS setup, if the user in error sets the year of the system date to a value which is out of a set range (for example, a year before 1980), the BIOS compulsorily changes that year to the earliest year (for example, 1981) within the set range. Since the year undergoing the change by the BIOS will also be in error, if the computer system starts without proper processing, a POST error occurs, and the BIOS displays a self diagnostic screen, for example, shown in FIG. 43 and subsequently stands by for an input through a key operation by the user. In the self diagnostic screen shown in FIG. 43, as an error diagnosis result, an error message is to the effect of checking the error code "0271" and the setting of the date.

If the computer system starts with the year in error, there is a great possibility that problems may occur , for example, when a personal computer employs the Windows 95 produced by Microsoft Corporation, which is well-known as an OS for personal computers. Accordingly, when seeing the above-mentioned diagnosis result indicating a POST error, the user is required to press the F2 key to cause an advance to the BIOS setup, thereby altering the setting of the system date.

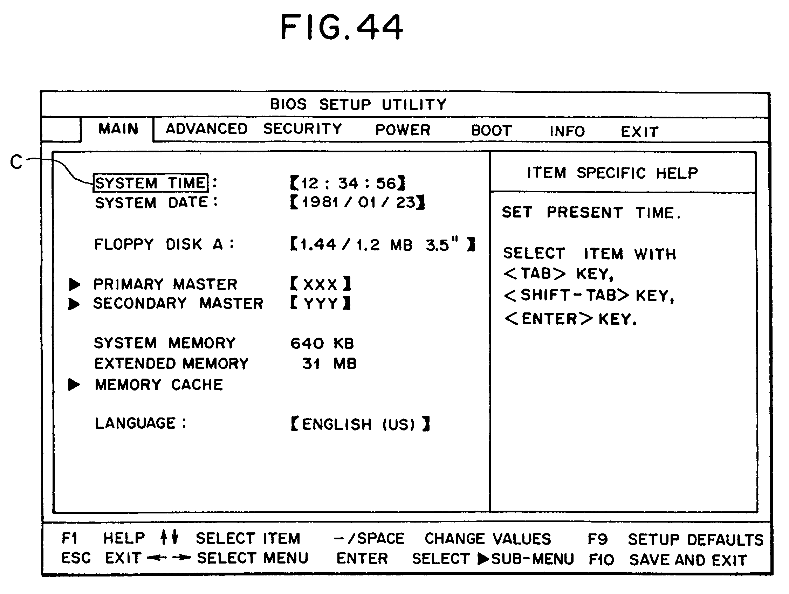

That is, the user refers to the self diagnostic screen shown in FIG. 43 and presses the F2 key to make a main menu screen for the BIOS setup appear as shown in FIG. 44. At this time, assuming that the user presses the F2 key in the self diagnostic screen shown in FIG. 43, as mentioned before, the screen of the displaying section immediately switches from the self diagnostic screen to the BIOS setup main menu screen shown in FIG. 44. While the main menu screen shown in FIG. 44 is substantially identical in display contents to the screen shown in FIG. 39, in the case of the main menu screen shown in FIG. 44, the year of the system date is set to "1981". Just after the switching of the displaying state to the main menu screen shown in FIG. 44, the cursor C for selection of the setup item is at the uppermost setup item "SYSTEM TIME", and help information about the setup item where the cursor C exists is displayed in the help item column.

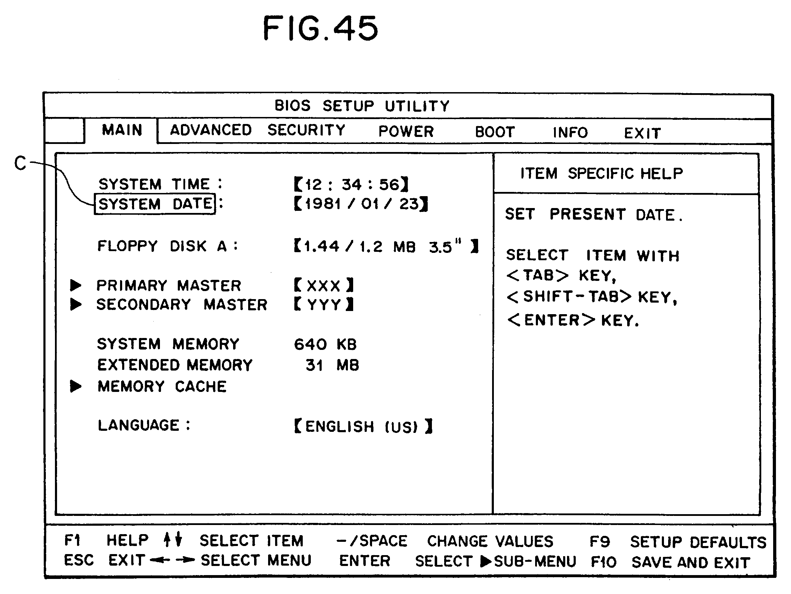

Now, in response to the display of the main menu screen for the BIOS setup shown in FIG. 44, the user depresses the "↓" key to shift the cursor C to the position of the "SYSTEM DATE" as shown in FIG. 45. Upon positioning the cursor C at the "SYSTEM DATE", the help information "SET PRESENT DATE. SELECT ITEM WITH 〈TAB〉 KEY, 〈SHIFT-TAB〉 KEY, 〈ENTER〉 KEY." corresponding to the "SYSTEM DATE" is displayed in the item specific help column in the screen as shown in FIG. 45.

In this displaying state, the user operates the "Tab" key, the "Shift-Tab" key and the "Enter" key for the selection of the year, and then, operates the "-/Space" key, thereby changing the mistaken year "1981" to the correct year, for example, "1998" and setting it. Owing to this, the POST error caused by the mistaken setting of the system data (year) is eliminable.

As described above, with the computer system, when some POST error comes about, the BIOS displays an error message and assumes a stand-by condition for a key operation (a waiting condition for the pressing of the F2 key) by the user. In this instance, the reason why the key operation stand-by condition is entered at the occurrence of a POST error is that the change of the settings of the BIOS setup items and others is considered to have been done at the users's spontaneous will. So far, even in the key operation stand-by condition, pressing the F1 key permits the starting of the system. That is, if the user wants to immediately start the system even though a problem may exist in the setting condition of the BIOS setup item, the user can take the measure of pressing the F1 key.

Contrary to this, if the user wants to change and set the BIOS setup item to correct that POST error, the user is required to accomplish the change of the setting matters by way of checking an error message on the screen in the key operation stand-by condition and, in case where the POST error is correctable through the use of the BIOS setup function, by pressing the F2 key as mentioned before to display the main menu screen for the BIOS setup and further displaying for himself a screen including the incorrect BIOS setup item.

However, there is a possibility that some users can not correctly understand the meaning of the error message and may encounter difficulty in taking some action against the POST error or, irrespective of understanding, can not put the BIOS setup item being changed on the displaying screen.

In addition to the above-mentioned two kinds of POST errors, other errors are possible as will be mentioned herein later, and it is difficult for the user to see through all the possible errors at all times.

Furthermore, while the user also can make a display of a screen including a desired BIOS setup item while referring to the manual, some POST errors require an in-depth study of the manual, so that difficulty can be experienced in quickly coping with the POST errors.

Meanwhile, in recent years, personal computers have come into extremely widespread use, and in situations that the users having little knowledge about the operation of personal computers, it is considered that, to the users, it is more preferable to urge the users to make a setting change rather than leaving it entirely to user's spontaneous will, which leads to a good service to the users. Accordingly, in recent years, there is a tendency toward, at the occurrence of a POST error, urging the users to make a setting change of a BIOS setup item for eliminating the POST error.

Accordingly, it is desirable to provide an error handling method for use man information processing system, an information processing system, a control unit and a program-stored computer readable record medium which, when an error occurs, allows the user to easily specify the error occurrence factors (matters being changed) and to quickly and appropriately eliminate the error.

In accordance with an embodiment of a first aspect of the present invention, there is provided an error handling method for use in an information processing system for dealing with an error detected through a power on self test of the information processing system through the use of a setup function, wherein the error is detected by the power on self test and, in response to the error detection, a setup screen is displayed on a displaying section of the information processing system to change contents to be changed for elimination of the error.

At this time, in the case of the error being eliminable through the use of the setup function, it also may be appropriate to put the setup screen for the elimination of the error on the displaying section of the information processing system, or to inform, or indicate, the details of the error and the contents to be changed for the elimination of the error as error information through the setup screen.

In addition, it may also be appropriate to display, as the setup screen, a screen including a setup item corresponding to the contents to be changed for the elimination of the error, and, in this case, to emphatically indicate the setup item in the setup screen.

Furthermore, it is also possible that an error possibly detected by the power on self test and a setup screen for changing contents to be changed for eliminating the error may be mapped in advance into the information processing system (associated with each other in advance and put in the information processing system) and, on the basis of that mapping (correspondence) therebetween, the setup screen for changing the contents to be changed for eliminating the error is displayed on the displaying section of the information processing system.

Likewise, it is also possible that an error possibly detected by the power on self test and a setup item for changing contents to be changed for the elimination of the error may be mapped in advance into the information processing system and, on the basis of that mapping therebetween, the setup item for changing the contents to be changed for eliminating the error is displayed on the displaying section of the information processing system.

In this case, it is also acceptable that error message information corresponding to the error may be set in advance in the information processing system and the error message information is displayed on the displaying section of the information processing system.

Still further, it is also appropriate that, of errors possibly detected by the power on self test, an error eliminable through the use of the setup function and error information including the details of the error and the contents to be changed for eliminating the error may be mapped in advance into the information processing system and the error information to be informed by the setup screen is determined on the basis of the mapping.

Incidentally, a basic input output program of the information processing system can also be employed as the setup function.

On the other hand, an information processing system according to an embodiment of a second aspect of the present invention is equipped with a control section which, when the power on self test detects an error, starts a setup function to display a setup screen on a displaying picture plane of a displaying section for changing contents to be changed for eliminating the error.

In this instance, in the case that the error is eliminable through the use of the setup function, it is also appropriate that the control section can execute control so that the setup screen for the elimination of the error appears on the displaying section, or that the control section executes control so that the details of the error and the contents to be changed for eliminating the error are informed as error information through the setup screen.

Furthermore, it is also possible that the control section can operate so that a screen including a setup item corresponding to the contents to be changed for the elimination of the error appears as the setup screen, and that, at this time, the control section emphatically may make a display of the setup item in the setup screen.

Still further, it is also appropriate that a storage section can be provided which previously stores the correspondence between an error possibly detected by the power on self test and a setup screen for changing contents to be changed for eliminating the error, and on the basis of the correspondence stored in the storage section, the control section makes the displaying section display the setup screen for changing the contents to be changed for the elimination of the error.

Likewise, it is also appropriate that a storage section can be provided which previously stores the correspondence between an error possibly detected by the power on self test and a setup item for changing contents to be changed for eliminating the error, and on the basis of the correspondence stored in the storage section, the control section makes the displaying section display the setup item for changing the contents to be changed for the elimination of the error.

In this case, it does not matter if the storage section retains error message information corresponding to the error, while the control section makes the displaying section display the error message information.

Moreover, it is also acceptable that a storage section is provided which previously stores the correspondence between, of errors possibly detected by the power on self test, the error eliminable through the use of the setup function and error information including the details of the error and contents to be changed for the elimination of the error while the control section determines the error information to be informed through the setup screen on the basis of the correspondence stored in the storage section.

In addition, the above-described information processing system can be equipped with a displaying section.

Besides, it does not matter if a basic input output program serves as the setup function.

A control unit according to an embodiment of a third aspect of the present invention is for use in an information processing system including a power on self test and a setup function and is equipped with a control section which, when the power on self test detects an error, starts the setup function to display a setup screen for changing contents to be changed for elimination of the error in a displaying picture plane of a displaying section of the information processing system.

In this instance, if the error is eliminable through the use of the setup function, it is also appropriate that the control section can execute control so that the setup screen for the error elimination is displayed on the displaying section of the information processing system, and that the control section operates so that the details of the error and the contents to be changed for the error elimination are informed as error information through the setup screen.

In addition, it is also possible that the control section can execute control so that a screen including a setup item corresponding to the contents to be changed for the error elimination is displayed as the setup screen, and that, at this time, the control section is put into operation to emphatically indicate the setup item in the setup screen.

Moreover, it is also suitable that a storage section can be provided which previously stores the correspondence between an error possibly detected by the power on self test and a setup screen for changing contents to be changed for the elimination of the error, while on the basis of the correspondence stored in the storage section, the control section makes the displaying section of the information processing system display the setup screen for changing the contents to be changed for the elimination of the error.

Similarly, it is also suitable that a storage section can be provided which previously stores the correspondence between an error possibly detected by the power on self test and a setup item for changing contents to be changed for the elimination of the error, while on the basis of the correspondence stored in the storage section, the control section makes the displaying section of the information processing system display the setup item for changing the contents to be changed for the elimination of the error.

In this instance, it does not matter if the storage section retains error message information corresponding to the error, while the control section makes the displaying section of the information processing system indicate the error message information.

Furthermore, it is also appropriate that a storage section can be provided which previously stores the correspondence between, of errors possibly detected by the power on self test, an error eliminable through the use of the setup function and error information including the details of the error and contents to be changed for eliminating the error, while the control section determines the error information to be informed through the setup screen on the basis of the correspondence stored in the storage section.

Besides, in this case, the setup function can depend upon a basic input output program of the information processing program is a good compromise.

Moreover, a program-stored computer readable record medium according to an embodiment of a forth aspect of the present invention stores a program which makes a computer execute a setup function and a power on self test, wherein the program makes the computer serve as a control section for starting the setup function in accordance with an error detected by the power on self test to display a setup screen for changing the contents to be changed for elimination of the error in a displaying picture plane of a displaying section.

In this instance, in the case that the error is eliminable through the use of the setup function, it is also appropriate that, when making the computer serve as the control section, the program can control the displaying section so that the setup screen for the error elimination is displayed, and that, when making the computer serve as the control section, the program can operate so that the details of the error and the contents to be changed for the error elimination are informed as error information through the setup screen.

Furthermore, it is also possible that, when making the computer serve as the control section, the program can operate so that a screen including a setup item corresponding to the contents to be changed for the error elimination is displayed as the set up screen, and that, at this time, the program can be executed to emphatically indicate the setup item in the setup screen.

Still further, it is also suitable that the program can include a storage section for previously storing the correspondence between an error possibly detected by the power on self test and a setup screen for changing contents to be changed for the elimination of the error, while, when making the computer serve as the control section, on the basis of the correspondence stored in the storage section, the program makes the displaying section display the setup screen for changing the contents to be changed for the elimination of the error.

Likewise, it is also suitable that the program can include a storage section for previously storing the correspondence between an error possibly detected by the power on self test and a setup item for changing contents to be changed for the elimination of the error, while, when making the computer serve as the control section, on the basis of the correspondence stored in the storage section, the program makes the displaying section display the setup item for changing the contents to be changed for the elimination of the error.

In this case, it is also acceptable that the strage section can store error message information corresponding to the error, while, when making the computer serve as the control section, the program makes the computer refer to the storage section to determine the error message information to be displayed on the displaying section.

Moreover, it is also acceptable that the program can include a storage section for previously storing the correspondence between, of errors possibly detected by the power on self test, the error eliminable through the use of the setup function and error information including the details of the error and contents to be changed for the elimination of the error, while, when making the computer serve as the control section, the program makes the computer determine the error information to be informed through the setup screen on the basis of the correspondence stored in the storage section.

Besides, the setup function can depend upon a basic input output program.

With such an error handling method for use in an information processing system, such an information processing system, such a control unit and such a program-stored computer readable record medium as described above, upon the detection of an error by the power on self test, a setup screen for changing the contents to be changed for the elimination of the error can be immediately displayed, and therefore, the user (operator) of the information processing system can easily and properly change the hardware construction or the system resource according to the error.

At this time, error information including the details of the error and the contents to be changed for the elimination of the error can be displayed with a setup screen to be informed to the user, and therefore, the user of the information processing system can easily specify an error occurrence factor (matters to be changed).

In addition, a screen including a setup item corresponding to the contents to be changed for the error elimination can be displayed as a setup screen, and the user, receiving the error information, can immediately change and set the corresponding setup item on that setup screen.

Furthermore, because the corresponding setup item may be emphatically displayed in the setup screen, even if the various kinds of items appear within the setup screen, the user can visibly specify the corresponding setup item immediately.

Still further, since the setup screen/setup item/error information to be informed through the setup screen can easily and quickly be determined by the use of the correspondence between errors set in advance and the setup screen/setup item/error information, in response to an error detection result, the error information corresponding to the error coming into existence can immediately be informed through the setup screen.

Thus, with the error handling method for use in an information processing system, the information processing system, the control unit and the program-stored computer readable record medium according to an embodiment of the present invention, one or more of the following effects and advantages are obtainable.
[1] The detection of an error by the power on self test immediately causes a display of a setup screen for changing the contents to be changed for elimination of that error, and the user of the information processing unit can precisely and easily change the hardware construction or the system resource according to the error, thus leading to quick and appropriate elimination of the error.
[2] Error information including the details of an error and the contents to be changed for the error elimination is displayed in a setup screen to be informed to the user, and therefore, the user can easily specify the error occurrence factor (matters to be changed) and can quickly and precisely cope with the error.
[3] A screen including a setup item corresponding to the contents to be changed for the error elimination is displayed as a setup screen, and hence, the user, receiving the error information, can immediately change and set the corresponding setup item on that setup screen, so that the error is more quickly eliminable.
[4] Since the corresponding setup item is emphatically displayed in the setup screen, even if various kinds of items appear within the setup screen, the user can visibly specify the corresponding setup item immediately, which contributes to a speed-up of the error elimination.
[5] Because it is possible to easily and quickly determine error information to be informed through a setup screen on the basis of the correspondence between an error eliminable through the use of the setup function and that error information, it is possible to immediately inform the error information corresponding to the error through the setup screen, which contributes to further speed-up of the error elimination.

Reference will now be made, by way of example, to the accompanying drawings, in which:
FIG. 1 is a block diagram useful for describing a configuration of a principal portion (functional configuration for execution of BIOS) of a computer system (information processing system) according to an embodiment of the present invention and a BIOS function configuration;
FIG. 2 is a block diagram showing the entire arrangement of the computer system (information processing system) according to this embodiment;
FIG. 3 is an illustration useful for describing a structure of an error information table in this embodiment;
FIG. 4 is a flow chart available for describing an error handling procedure in this embodiment;
FIG. 5 is an illustration of a BIOS setup screen (main menu screen) in this embodiment;
FIG. 6 is an illustration of a BIOS setup screen (primary master menu screen) in this embodiment;
FIG. 7 is an illustration of a BIOS setup screen (detailed menu screen) in this embodiment;
FIG. 8 is an illustration of a BIOS setup screen (peripheral device configuration menu screen) in this embodiment;
FIG. 9 is an illustration of a BIOS setup screen (multimedia configuration menu screen) in this embodiment;
FIG. 10 is an illustration of a pop-up menu (setup alarm, error message) for notice of error information in this embodiment;
FIGs. 11 to 16 are respectively illustrations of pop-up menus (setup alarms, error messages) for notice of error information in this embodiment;
FIGs. 17 to 37 are respectively illustrations available for explaining BIOS setup screen display conditions in this embodiment at the occurrence of a POST error;
FIG. 38 is an illustration of a display example of a self diagnostic screen at the occurrence of a POST error (at the occurrence of a hard disk error);
FIGs. 39 and 40 are respectively illustrations of main menu screens for BIOS setup;
FIGs. 41 and 42 are respectively illustrations of primary master menu screens for BIOS setup;
FIG. 43 is an illustration of a display example of a self diagnostic screen at the occurrence of a POST error (at mistaken date setting) ; and
FIGs. 44 and 45 are respectively illustrations of main menu screens for BIOS setup.

An embodiment of the present invention will be described hereinbelow with reference to the drawings.

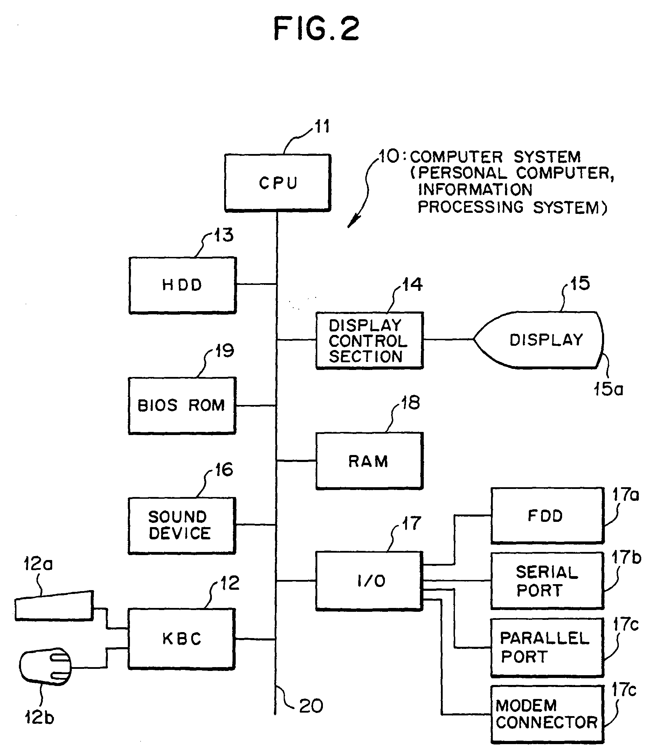

FIG. 2 is a block diagram showing the arrangement of a computer system (information processing system) according to this embodiment. In FIG. 2, a computer system (an information processing system; for example, a personal computer) 10 is shown as comprising a CPU 11, a keyboard controller (KBC) 12, a hard disk drive (HDD) 13, a display control section (display controller) 14, a display (displaying section; for example, a CRT, an LCD or the like) 15, a Sound device 16, an I/O 17, a RAM 18, a BIOS ROM 19 and a bus 20.

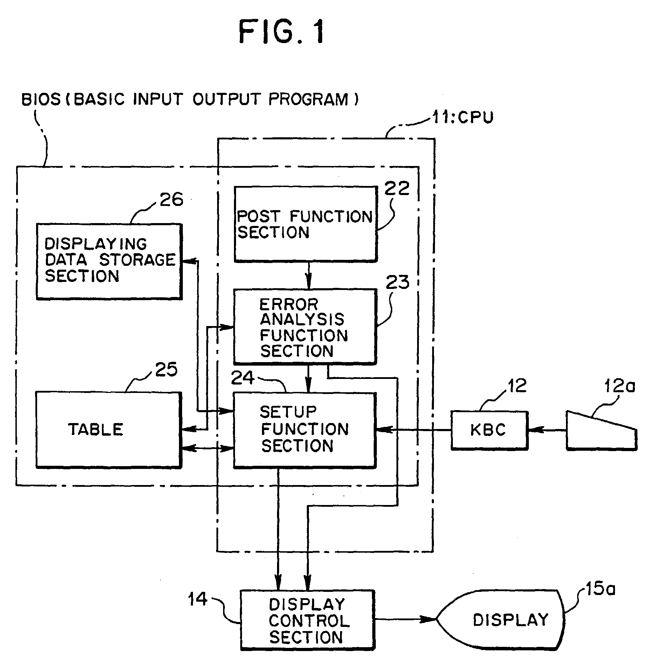

In this arrangement, in addition to conducting various kinds of operations through the executions of programs, the CPU 11 is operated to implement a BIOS (basic input output program) read out from the BIOS ROM 19 which will be mentioned herein later for controlling various types of hardware (input/output units and peripheral devices) such as a keyboard 12a, the display 15, a floppy disk drive (FDD) 17a and the HDD 13. That is, the CPU 11 acts as an error analysis function section 23 and a control function section 24 in addition to a setup function section 21 and a POST function section 22 as will be described herein later with reference to FIG. 1.

The keyboard controller 12 is in connection with the keyboard 12a and a mouse 12b to receive various kinds of information inputted in a way that the user (hereinafter referred to as an operator) operates the keyboard 12a and the mouse 12b, with the various kinds of information received to be handed over to the CPU 11.

The display control section 14 is for actually taking charge of the control the displaying state (display screen 15a) of the display 15 in accordance with instructions from the CPU 11.

The I/O 17 is in connection with the FDD 17a, a serial port 17b, a parallel port 17c and a MODEM connector 17d, and serves as an interface between the computer system 10 and the FDD 17a, the serial port 17b, the parallel port 17c and the MODEM connector 17d.

The RAM 18 serves as a working area being used for when the CPU 11 conducts the various kinds of operations, for example, is for storing a BIOS read out from the BIOS ROM 19 which will be described herein later, while the BIOS ROM 19 is for storing the BIOS in advance. A functional arrangement or configuration for the BIOS in this embodiment will be described herein later with reference to FIG. 1.

The bus 20 is for making mutual connections among the above-mentioned CPU 11, keyboard controller 12, HDD 13, display control section 14, sound device 16, I/O 17, RAM 18 and BIOS ROM 19, with various kinds of data being exchanged between these components.

Subsequently, referring to FIG. 1, a description will be made hereinbelow of a configuration of a principal portion (functional configuration for execution of the BIOS) of the computer system 10 and a functional configuration for the BIOS in this embodiment.

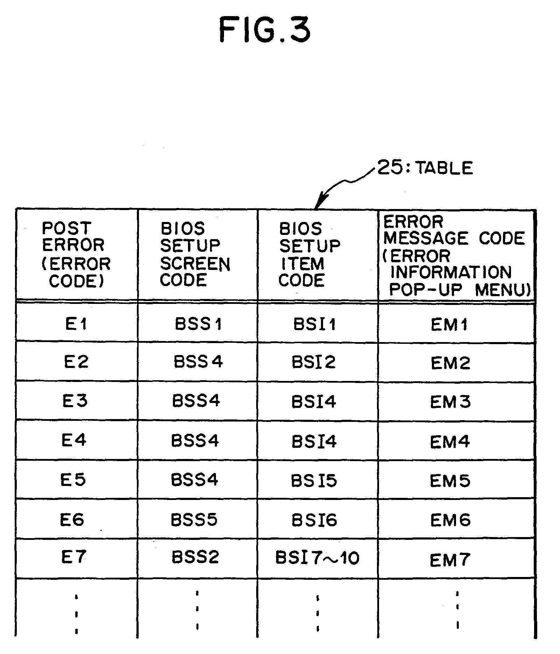

In this embodiment, the CPU 11 implements the BIOS read out from the BIOS ROM 19 to operate as the POST function section 22, the error analysis function section 23 and the setup function section 24 as shown in FIG. 1. The BIOS has a displaying data storage section 26 and a table 25 shown in FIG. 3, and is programmed so that the CPU 11 acts as the POST function section 22, the error analysis function section 23 and the setup function section 24.

Besides, although the BIOS is preinstalled within the computer system 10 in a state of being stored in the ROM 19 in this embodiment, it is also appropriate that the BIOS in this embodiment is presented in a state of being stored in a computer-readable record medium such as a hard disk, a magnetic tape, a floppy disk, an optical disk, a magneto-optical disk, a CD-ROM and subsequently installed from that record medium into a storage section such as a RAM within the computer system 10.

In this instance, the POST function section 22 is designed to make the CPU 11 perform a self diagnosis of the computer system 10 at the power-on (starting or booting) for the computer system 10 or the re-starting (including the re-starting after reset) thereof. This self diagnosis automatically accomplishes the checking of all the devices including the CPU 11, the HDD 13, the FDD 17a, the RAM 18 in the computer system 10 and further the checking of the configurations (environmental settings: settings of date/time, serial port 17b, parallel port 17c, sound device 16, power-saving mode and others) in the computer system 10.

The error analysis function section (error analyzing section) 23 analyzes the diagnosis result by the POST function section 22, and further, if it detects the occurrence of a POST error, analyzes the POST error to output an operating instruction to the setup function section 24 or the display control section 14 in accordance with that analysis result.

In addition, the error analysis function section 23 is placed into operation to start up the computer system 10 in the case that no POST error occurs or in the case that the analysis result shows that the occurrent POST error is not directly involved in the settings by the BIOS setup, and, on the other hand, is operated to immediately start up the setup function section 21 when the analysis result indicates that the occurrent POST error is eliminable through the BIOS setup (when it is an error to be corrected by the execution of the BIOS setup).

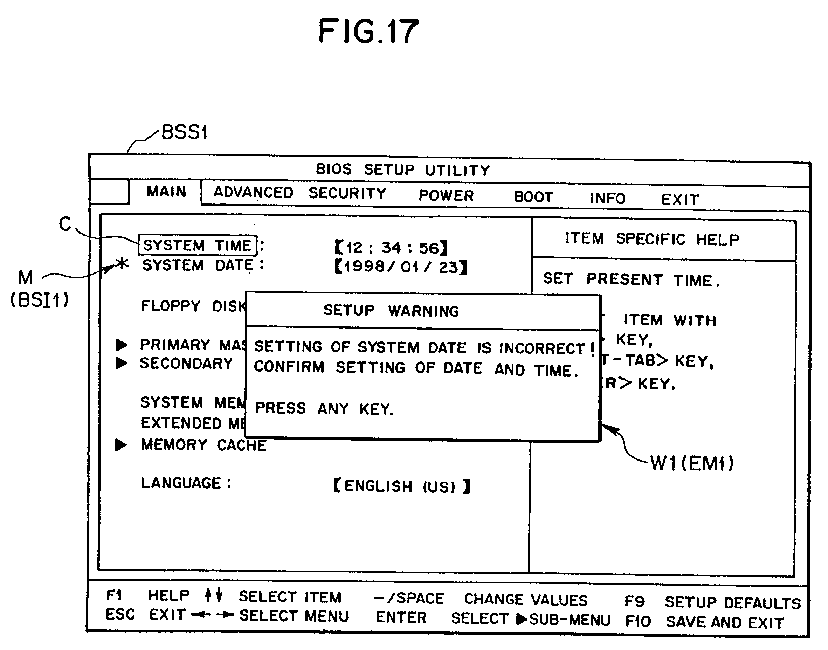

The setup function section (control section) 24 is for setting and changing the configuration matters including operational parameters for the above-mentioned various types of hardware, the system date and others. At the setup, the setup function section 24 reads out data from a displaying data storage section 26 which will be mentioned herein later, and outputs an display operating instruction to the display control section 14 so that a BIOS setup screen is displayed as a display screen 15a on the display 15, and further changes a BIOS setup item setting condition on the basis of information inputted in a manner that the operator refers to the displayed screen and manipulates the keyboard 12a. Incidentally, the concrete examples of screens to be displayed on the display 15 in this embodiment will be described herein later with reference to FIGs. 17 to 37.

Moreover, when being started by the error analysis function section 23, the setup function section (control section) 24 in this embodiment shifts the display screen 15a on the display 15 to BIOS setup screens which will be described herein later with reference to FIGs. 17 to 37 such that error information (error message) including the details of a POST error and the contents to be changed for the elimination of the POST error is indicated as a pop-up menu (window) in these BIOS setup screens.

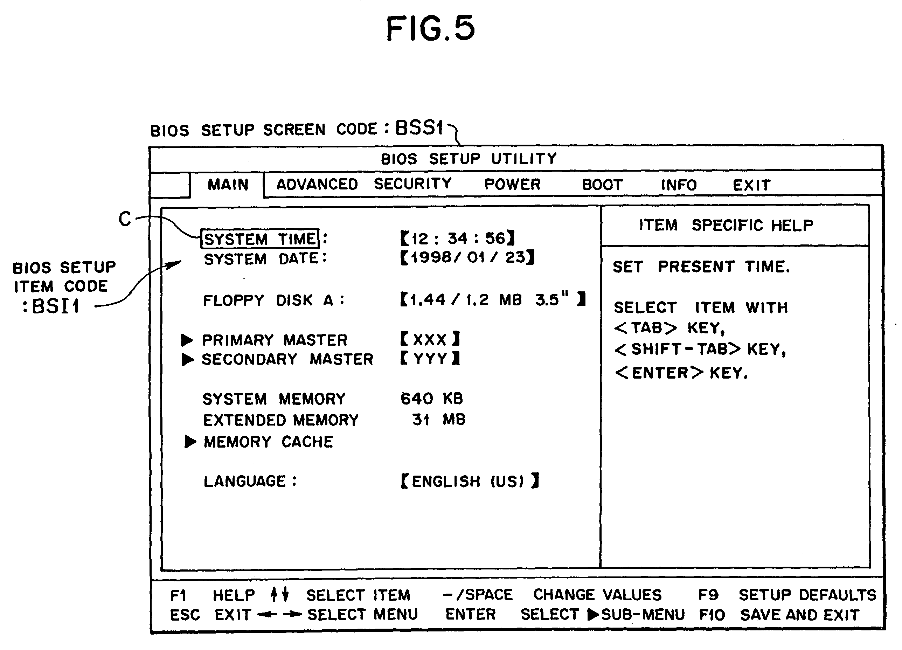

For instance, the screens shown in FIGS. 5 to 9 base the BIOS setup screens appearing on the display 15. Practically, as will be described herein later with reference to FIGs. 17 to 37, in this embodiment, the BIOS setup screen display includes the contents (BIOS setup item) to be changed for the elimination of the occurrent POST error, and in this embodiment, for the purpose of emphasizing the BIOS setup item to be changed, for example, an asterisk mark (*) appears at a left end portion of that item (see FIGs. 17 to 37).

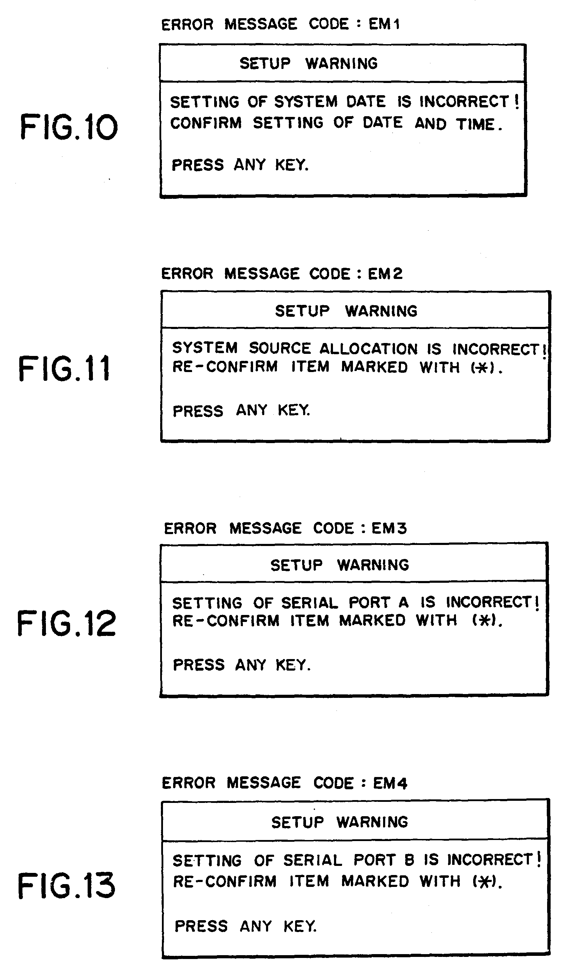

In addition, the pop-up menu, for example shown in FIGs. 10 to 16, notices the operator of error information (error message; details of the POST error and the contents to be changed for the elimination of the POST error), and for the purpose of making a request for a change of the setting of the predetermined item, the error information is indicated in the form of a window concurrently with the displaying of the BIOS setup screen corresponding to the POST error.

Each of the data to be put on the display 15, that is, a base screen of a BIOS setup screen, an error message and a BIOS setup item to be indicated emphatically, is retained in the displaying data storage section 26 in a code-related condition.

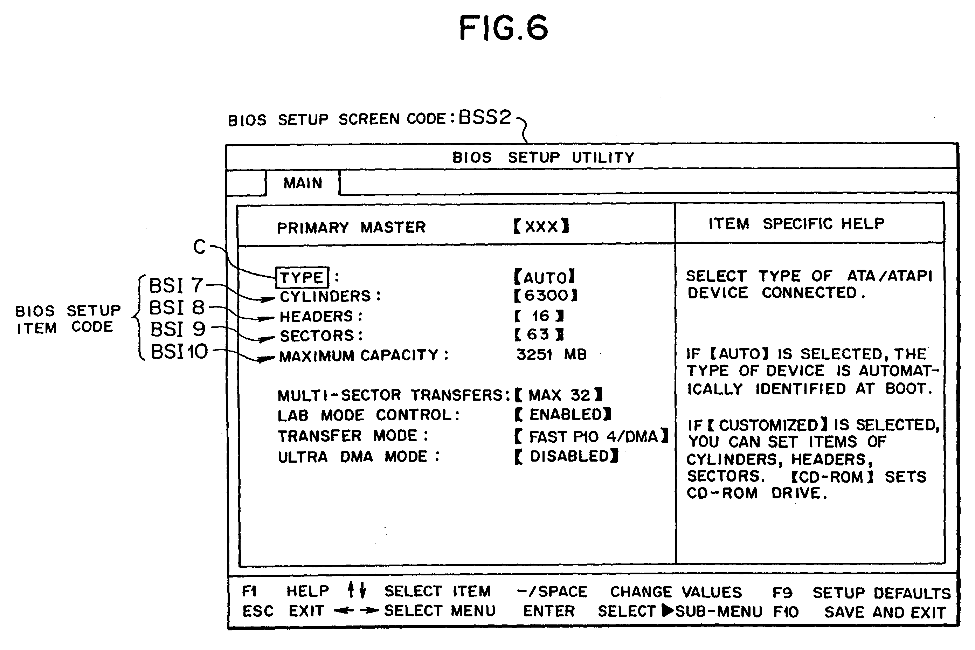

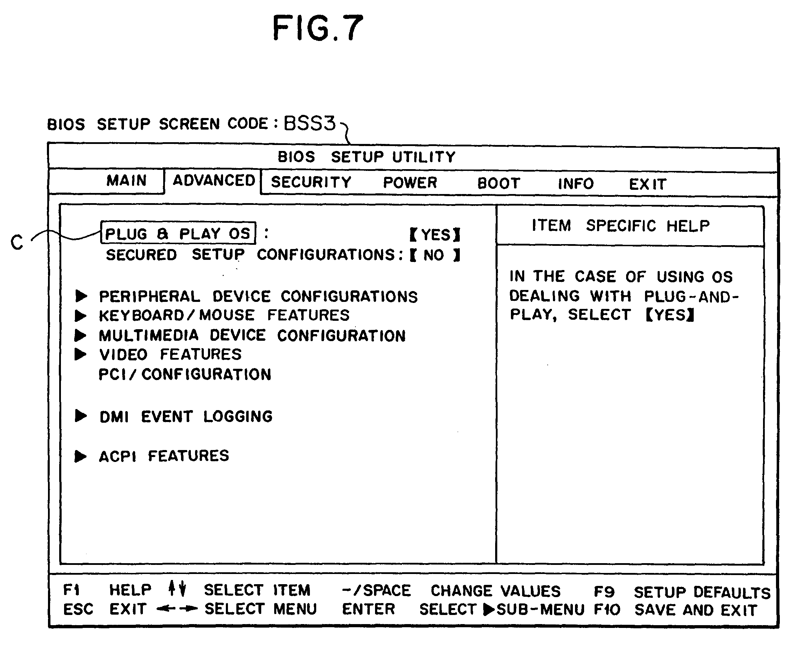

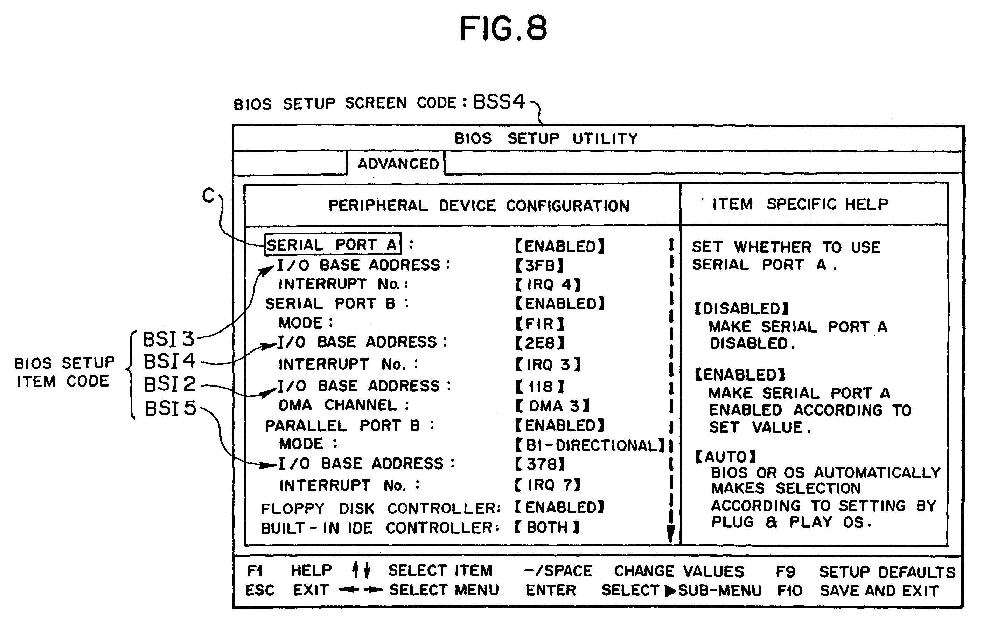

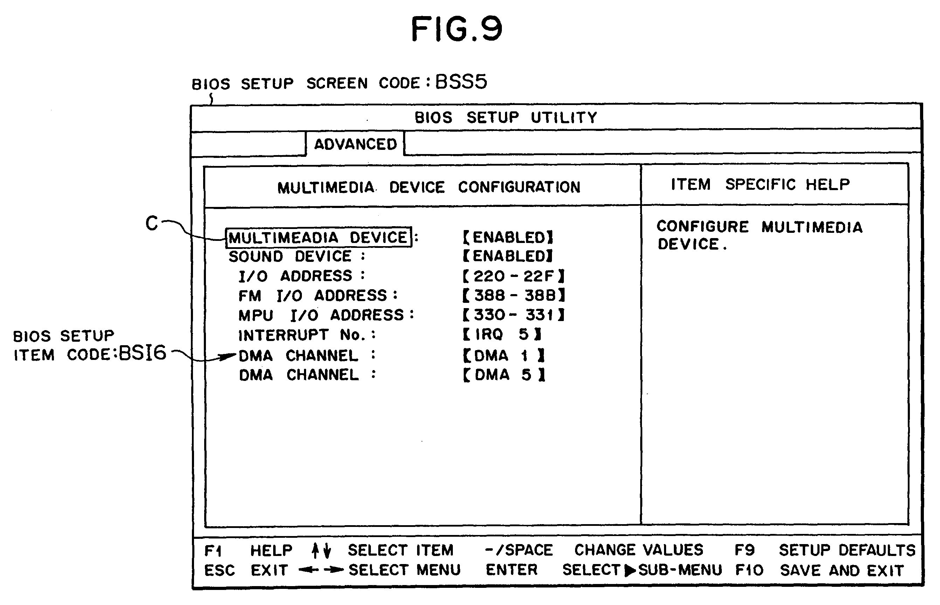

In the displaying data storage section 26, as a base screen for the BIOS setup screen, for example, the main menu shown in FIG. 5 is retained in relation to a BIOS setup screen code BSS1, and the primary master menu screen shown in FIG. 6 is resident with a BIOS setup screen code BSS2, and a detailed menu screen shown in FIG. 7 is held with a BIOS setup screen code BSS3, and a peripheral device configuration menu screen shown in FIG. 8 is resident with a BIOS setup screen code BSS4, and further a multimedia configuration menu screen shown in FIG. 9 stays with a BIOS setup screen code BSS5. The setup function section 24 designates a BIOS setup screen code to read out the base screen corresponding to that code from the displaying data storage section 26.

Besides, in FIGs. 5 to 9, a reference mark C represents a cursor for selecting a setup item, and each screen takes a condition immediately after the screen display, that is, a condition that the cursor C is positioned at the uppermost setup item. Actually, the cursor C is indicated by inverting a rectangular area including the setup item. Help information relating to the setup item at which the cursor C exists appears in an item specific help column in each screen.

Furthermore, in the displaying data storage section 26, as a BIOS setup item to be indicated emphatically, for example, the "SYSTEM DATE" within the main menu screen shown in FIG. 5 is placed with a BIOS setup item code BSI1, and the "I/O BASE ADDRESS" for FIR within the peripheral device configuration menu screen shown in FIG. 8 is placed with a BIOS setup item code BSI2, and the "I/O BASE ADDRESS" for a serial port A within the peripheral device configuration menu screen shown in FIG. 8 is held with a BIOS setup item code BSI3, and the "I/O BASE ADDRESS" for a serial port B within the peripheral device configuration menu shown in FIG. 8 is held with a BIOS setup item code BSI4, and the "I/O BASE ADDRESS" for a parallel port within the peripheral device configuration menu screen shown in FIG. 8 is retained with a BIOS setup item code BSI5, and further, the "DMA CHANNEL" within the multimedia configuration menu screen shown in FIG. 9 stays with a BIOS setup item code BSI6, and even, the "TYPE", "CYLINDERS", " HEADERS" and "SECTORS" within the main menu shown in FIG. 6 remain with BIOS setup item codes BSI7 to BSI10, respectively. The setup function section 24 appoints a BIOS setup item code, so that the BIOS setup item corresponding to that code can be read out from the displaying data storage section 26 and specified.

Still further, in the displaying data storage section 26, as error messages, for example, the pop-up menus (setup alarms) for the notice of error information shown in FIGs. 10 to 16 are held with error message codes EM1 to EM7, respectively. By designating an error message, the setup function section 24 reads out the error message corresponding to that code from the displaying data storage section 26. Incidentally, the details of the error messages will be described herein later.

On the other hand, in the table (storage section) 25, as shown in FIG. 3, with respect to each of error codes E1 to E7 for a POST error eliminable through the BIOS setup, there are previously set information (BIOS setup screen code) for designating a base screen for a BIOS setup screen, including the contents (BIOS setup item) to be changed for elimination of the POST error, and information (BIOS setup item code) for appointing the BIOS setup item, and further, information (error message code) for specifying an error message (error information including the details of the POST error and the contents to be changed for the elimination of that error) corresponding to that POST error.

In this embodiment, among the errors handled as the POST errors eliminable through the BIOS setup, for example, there are 1) setting errors of the system date, 2) errors occurring due to the competition of an I/O base address, an interruption number or a DMA (Direct Memory Access) channel with other devices, 3) setting errors of a serial port, 4) setting errors of a parallel port, 5) setting errors of a sound device, and 6) errors in a hard disk.

In this case, for example, let it be assumed that an error code for the system date setting errors of 1) is taken to be E1, an error code for, of the errors of 2), an error occurring from the fact that the I/O base address for FIR completes with other devices is taken as E2, an error code for, of the errors of 3), a setting error of the I/O base address of the serial port A is taken as E3, an error code for, of the errors of 3), a setting error of the I/O base address of the serial port B is taken as E4, an error code for, of the errors of 4), a setting error of the I/O base address is taken as E5, an error code for, of the errors of 5), a setting error of the DMA channel is taken as E6, and an error code for the hard disk error of 6) is taken as E7.

In the table 25 shown in FIG. 3, with respect to each of the above-mentioned error codes E1 to E7, there are previously set and registered information on data to be indicated in correspondence with each of the errors, that is, a code for a BIOS setup screen (base screen), a code for a BIOS setup item to be indicated emphatically and a code for an error message. For instance, with respect to the error code E1, there are set the BIOS setup screen code BSS1, the BIOS setup item code BSI1 and the error message code EM1. In like manner, the error code E2 corresponds to the BIOS setup screen code BSS4, the BIOS setup item code BSI2 and the error message code EM2, and the error code E3 corresponds to the BIOS setup screen code BSS4, the BIOS setup item code BSI3 and the error message code EM3, and the error code E4 corresponds to the BIOS setup screen code BSS4, the BIOS setup item code BSI4 and the error message code EM4, and the error code E5 is in relation to the BIOS setup screen code BSS4, the BIOS setup item code BSI5 and the error message code EM5, and further, the error code E6 is in relation to the BIOS setup screen code BSS5, the BIOS setup item code BSI6 and the error message code EM6, and even, the error code E7 is in relation to the BIOS setup screen code BSS2, the BIOS setup item codes BSI7 to BSI10 and the error message code EM7. Incidentally, the BIOS setup screen codes, the BIOS setup item codes and the error message codes shown in FIG. 3 are equivalent to those mentioned before with reference to FIGs. 5 to 16.

Moreover, in this embodiment, when a POST error comes about, the error analysis function section 23 retrieves the table 25 on the basis of the error code for that error, and depending on the presence or absence of that error code in the table 25, makes a decision as to whether or not the occurrent POST error is an error eliminable through the BIOS setup.

When the error analysis function section 23 makes a decision that the POST error eliminable through the BIOS setup occurs, in this embodiment, the setup function section 24 receives the error code for the occurrent POST error in addition to the fact thereof from the error analysis function section 23, and retrieves the table 25 on the basis of that error code to obtain the BIOS setup screen code, BIOS setup item code and error message code corresponding to that error code, and subsequently, reads out a BIOS setup screen, a BIOS setup item and an error message, which are relation to these codes, from the displaying data storage section 26 to control the displaying of the BIOS setup screen and the error message or the emphatic displaying of the BIOS setup item.

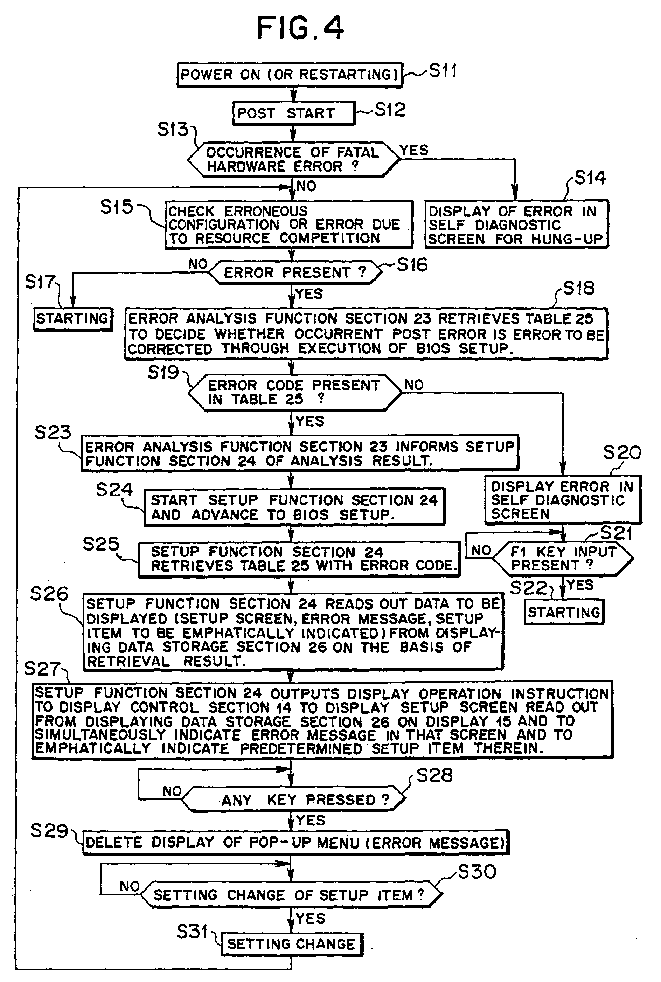

Secondly, referring to FIGs. 4 to 37, a description will be given hereinbelow of an operation of the computer system 10 thus arranged according to this embodiment.

First, a description begins from an error handling procedure according to this embodiment with reference to a flow chart (steps S11 to S31) shown in FIG. 4.

On the power-on or restarting of the computer system 10 (step S11), the POST function section 22 starts the power on self test (POST) (step S12).

The error analysis function section 23 receives the diagnosis result from the POST function section 22 to first decides whether or not a fatal hardware error takes place (step S13).

The fatal hardware error mentioned here signifies a POST error uncorrectable through a setting change by the BIOS setup because its occurrence is caused by the hardware. Such an error deviates from the object in this invention. Concretely, among the fatal hardware errors, there are 1) setting errors of a card bus, 2) errors in a keyboard controller, 3) errors in a system memory, 4) errors in a shadow memory, 5) errors in an expanded memory, 6) errors in a system timer, 7) errors in a real time clock (RTC), 8) errors in a memory cache and others.

In case where a fatal hardware error arises (YES route from step S13), the error analysis function section 23 informs the display control section 14 of its analysis result and makes the display 15 indicate the fact of the occurrence of the fatal hardware error with a self test screen similar to that shown in FIG. 38 or 42, before bringing the computer system 10 into a hung-up condition (step S14).

If no fatal hardware error occurs (NO route from step S13), the POST function section 22 checks whether or not a POST error resulting from a configuration error or resource competition comes about (step S15). Upon receipt of the check result by the POST function section 22, the error analysis function section 23 analyzes this result and, if making a decision to no occurrence of the aforesaid POST error (NO route from step S16), starts up the computer system 10 as scheduled (step S17).

On the other hand, if a POST error due to a configuration error or resource competition exists (YES route from step S16), receiving the diagnosis result from the POST function section 22, the error analysis function section 23 retrieves the table 25 referring to the error code for the occurrent POST error, and in accordance with the presence or absence of the error code in the table 25, makes a decision on whether or not that POST error is an error to be corrected by the execution of the BIOS setup (that is, an error correctable through the BIOS setup) (step S18).

If the result obtained when the error analysis function section 23 retrieves the table 25 on the basis of the error code shows that the error code is not present in the table 25 (NO route from step S19), a decision is made to that the occurrent POST error does not apply to the error to be corrected by the execution of the BIOS setup, and hence, the error analysis function section 23 informs the display control section 14 of its analysis result and further makes the display 15 indicate the fact (a warning message mentioned later) of the occurrence of the POST error with a self test screen similar to that shown in FIG. 38 or 42 (step S20). Following this, an F1 key operation stand-by condition depending on the operator referring to the self test screen takes place (step S21). In response to the F1 key operation (YES route from step S21), the computer system 10 starts (step S22).

In this instance, a POST error that requires no correction by the BIOS setup is of a type that a cause for its occurrence depends upon an operating environment, and is an error not directly involved in the settings by the BIOS setup. Such an error deviates from the object in this invention, concretely occurring in the case of a) dead of a battery for the system, b) incorrect checksum of a system CMOS or c) no normal completion of the previous start-up.

Incidentally, in the case of the aforesaid a), as a warning message, an indication "System battery is dead - Replace and run SETUP" appears in the self test screen. Further, in the case of the aforesaid b), as a warning message, an indication "System CMOS checksum bad - Default configuration used" appears in the self test screen. Still further, the aforesaid c) brings about an indication of a warning message "Previous boot incomplete - Default configuration used".

On the other hand, the result obtained when the error analysis function section 23 retrieves the table 25 referring to the error code shows that the error code is present in the table 25 (YES route from step S19), a decision is made to that the occurrent POST error applies to an error to be corrected by the execution of the BIOS setup, and therefore, the error analysis function section 23 informs the analysis result in addition to the error code for the occurrent POST error to the setup function section 24 (step S23). With this communication, the setup function section 24 starts, and the computer system 10 immediately proceeds to the BIOS setup (step S24).

At this time, in this embodiment, the setup function section 24 retrieves the table 25 with the error code given by the error analysis function section 23 to get a BIOS setup screen code, a BIOS setup item code and an error message code which correspond to that error code (step S25), and reads out a BIOS setup screen, a BIOS setup item and an error message, to which these codes are allocated, from the displaying data storage section 26 (step S26).

Moreover, the setup function section 24 makes the display 15 produce the BIOS setup screen (base screen) read out from the displaying data storage section 26 and concurrently indicate the error message in the same screen in the form of a window, and further, outputs a display operating instruction to the display control section 14 so that an emphatic indication takes place in such a manner that an asterisk mark (*) is placed for the predetermined BIOS setup item corresponding to the POST error (step S27).

Thus, in the case that a POST error to be corrected through the use of the BIOS setup occurs, in this embodiment, in the display 15 the self test screen shown in FIG. 38 or 42 does not appear (or appears in a moment), but the BIOS setup screen (see, for example, FIG. 17, 20, 23, 26, 29, 32 or 35) corresponding to the POST error immediately appears. This causes the details of the POST error to be indicated to the operator and makes a request for a setting change of the predetermined item. Incidentally, the details of the concrete examples of the BIOS setup screens corresponding to the POST errors will be described herein later.

In this instance, the POST errors undergoing the YES decision in the step S19 are the errors (errors 1) to 5)) certainly eliminable through the settings by the BIOS setup because a cause for its occurrence is involved in the settings by the BIOS setup, or the error (error 6)) possibly corrected by a setting change by the BIOS setup because a cause for its occurrence comes from the hardware or the setting by the BIOS setup, and these errors constitute the object in this invention.

As the concrete examples of these errors, there are 1) setting errors of the system date, 2) errors occurring due to the competition of an I/O base address, an interruption number or a DMA channel with other devices, 3) setting errors of a serial port, 4) setting errors of a parallel port, 5) setting errors of a sound device, and 6) errors in a hard disk.

Referring here to FIGs. 17 to 37, a description will be given hereinbelow of, in addition to the BIOS setup screens and error messages appearing in the display 15 in this embodiment in the case of the occurrence of the aforesaid errors of 1) to 6), emphatic display examples and an item setting change procedure. The description will be made at every error.

Each of the setting errors of the system date of 1) is, as mentioned previously, an error occurring when the operator sets a year (for example, 1980) being out of the setting range as the year of the system date in error.

In the case of the occurrence of an error of 1), the retrieval of the table 25 in FIG. 3 takes place with the error code E1 for that error of 1), thereby obtaining the BIOS setup screen code BSS1, the BIOS setup item code BSI1 and the error message code EM1. The data corresponding to these codes BBSS1, BSI1 and EM1 are read out from the displaying data storage section 26 to be put on the display 15.

In this embodiment, as shown in FIG. 17, the base screen (main menu screen) of FIG. 5 corresponding to the BIOS setup screen code BSS1 and having a system date as the BIOS setup item is read out and displayed, and simultaneously, the error message "SETTING OF SYSTEM DATE IS INCORRECT! CONFIRM SETTING OF DATE AND TIME. PRESS ANY KEY." in FIG. 10 corresponding to the error message code EM1 is indicated in a window W1 existing at a nearly central portion of the base screen. Additionally, on the code BSS1 base screen, an asterisk mark M is placed at a left end portion of the item corresponding to the BIOS setup item code BSI1, that is, the item "SYSTEM DATE" whose contents are to be modified, so that the emphatic indication is made on the item "SYSTEM DATE" dependent on the error of 1).

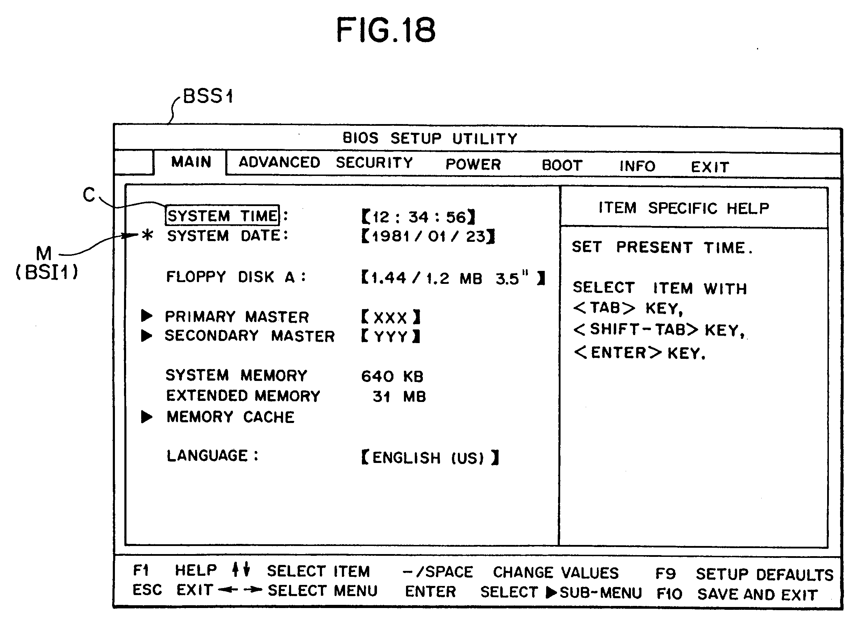

The operator refers to the BIOS setup screen shown in FIG. 17 to press any key on the keyboard 12a in accordance with the setup warning in the window W1. When detecting the depression of the key on the keyboard 12a (YES route from step S28 in FIG. 4), the setup function section 24 deletes the pop-up menu (error message) appearing in the window W1 (step S29 in FIG. 4) while producing the display of the BIOS setup screen shown in FIG. 18.

In the screen shown in FIG. 18, since the operator sets the year (for example, 1980) being out of the setting range as the year of the system date in error, the year of the system date results in the setting of the year of the system date to the earlier year "1981" within the setting range. At a point of time of the display of the screen shown in FIG. 17 or 18, the cursor C for the selection of the setup item is at the uppermost setup item "SYSTEM TIME", and the item help column takes a condition of indicating the help information "SET PRESENT TIME. SELECT ITEM WITH 〈TAB〉 KEY, 〈SHIFT-TAB〉 KEY, 〈ENTER〉 KEY." concerning the setup item at which the cursor C exists.

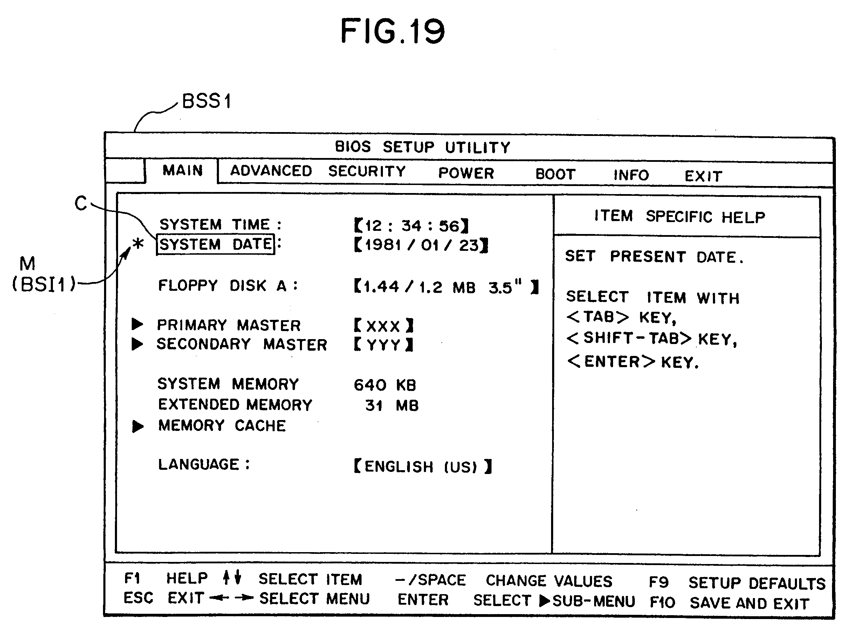

The operator presses the "↓" key while seeing the BIOS setup screen shown in FIG. 18 to shift the cursor C up to the position of the item "SYSTEM DATE" marked with the asterisk M as shown in FIG. 19. In response to the cursor C being positioned at that item "SYSTEM DATE", as shown in FIG. 19, the item specific help column in the screen comes into indication of the help information "SET PRESENT DATE. SELECT ITEM WITH 〈TAB〉 KEY, 〈SHIFT-TAB〉 KEY, 〈ENTER〉 KEY." corresponding to that item "SYSTEM DATE". In this indication condition, the operator operates the "Tab" key, the "Shift-Tab" key and the "Enter" key for the selection of a year, and subsequently, operates the "-/Space" key, whereupon the mistaken year "1981" is corrected to the right year, for example, "1998". Accordingly, the POST error originating from the mistaken setting of the system date (year) is eliminable.

The errors of 2) due to the competition with other devices occur, for example, in case where the I/O base address (or the interruption number, or the DMA channel) being already in service is allocated to a new device.

For instance, if such an error of 2) is of the type coming into existence due to the competition of the I/O base address for FIR with other devices, the retrieval of the table 25 shown in FIG. 3 is done with the error code E2 assigned to that error, thereby drawing the corresponding BIOS setup screen code BSS4, BIOS setup item code BSI2 and error message code EM2. Further, the data corresponding to these codes BSS4, BSI2 and EM2 are fetched from the displaying data storage section 26 to be put on the display 15.

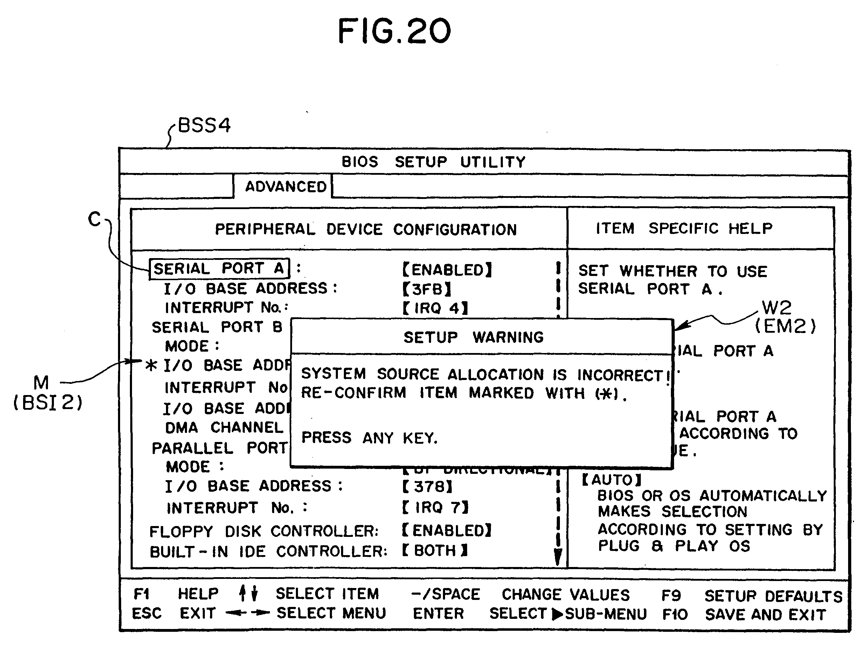

In this embodiment, as shown in FIG. 20, the base screen (peripheral device configuration menu screen) in FIG. 8 corresponding to the BIOS setup screen code BSS4 and having the I/O base address for FIR as the BIOS setup item is read out to be displayed, and concurrently, the error message "ALLOCATION OF SYSTEM SOURCE IS INCORRECT! RE-CONFIRM ITEM MARKED WITH [*]. PRESS ANY KEY." in FIG. 11 corresponding to the error code EM2 is displayed in a window W2 appearing at a nearly central portion of the base screen. In addition, on the base screen corresponding to the code BSS4, an asterisk mark M is placed at a left end portion of the BIOS setup item code BSI2 item, that is, the item "I/O BASE ADDRESS" whose contents are to be modified, which emphatically indicates the item "I/O BASE ADDRESS" relating to the error of 2).

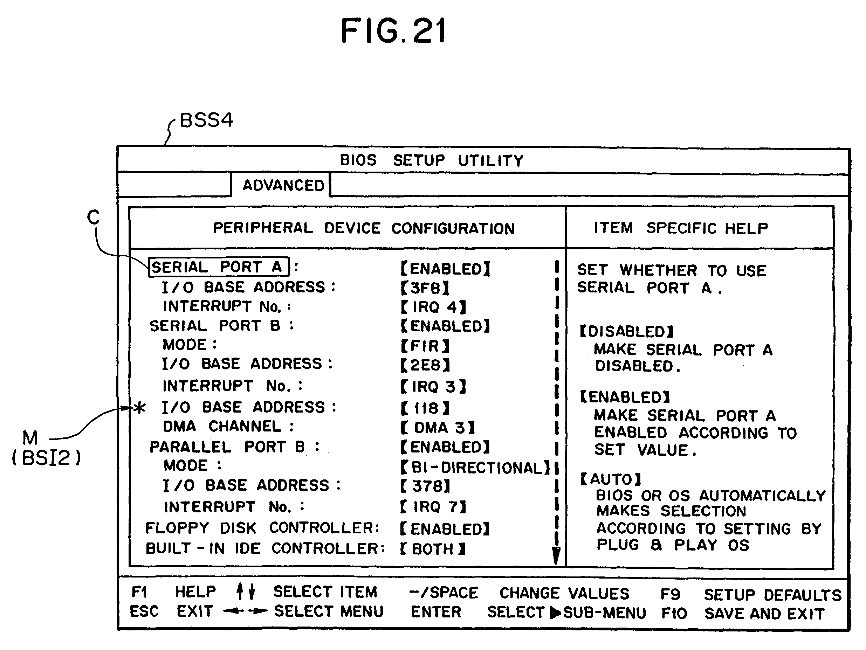

When seeing the BIOS setup screen shown in FIG. 20, the operator presses one key on the keyboard 12a in accordance with the setup warning in the window W2. In response to a detection being made of the press of the one key on the keyboard 12a (YES route from step S28 in FIG. 4), the setup function section 24 deletes the pop-up menu (error message) indicated in the window W2 (step S29 in FIG. 4), while making a display of the BIOS setup screen shown in FIG. 21.

At a point of time of the display of the screen shown in FIG. 20 or 21, the cursor C for selection of the setup item is at the uppermost setup item "SERIAL PORT A", and the item help column gets into a condition of indicating the help information about the setup item "SERIAL PORT A" at which the cursor C exists.

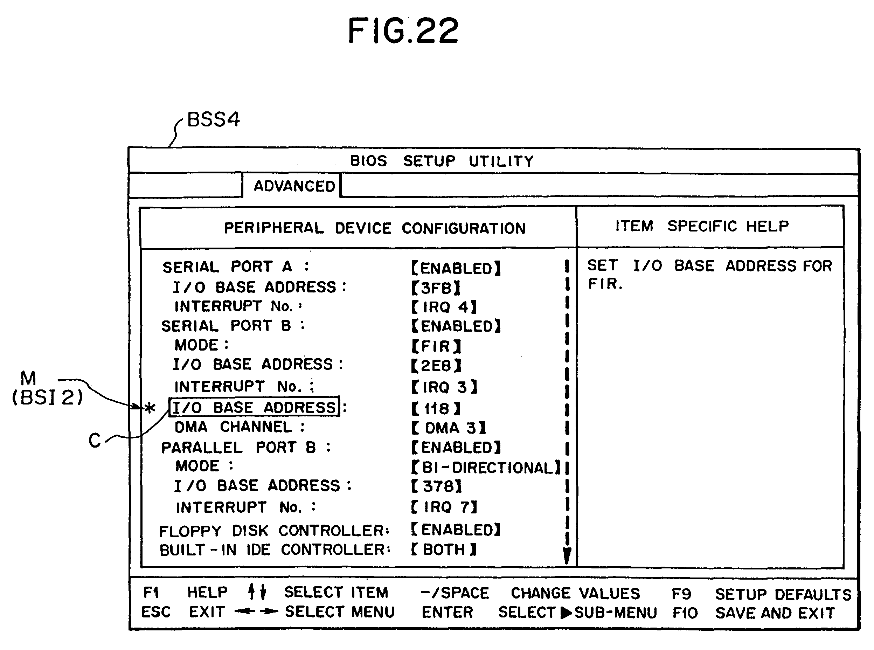

The operator presses the "↓" key while referring to the BIOS setup screen shown in FIG. 21 to move the cursor C to the position of the item "I/O BASE ADDRESS" marked with an asterisk M as shown in FIG. 22. On the arrival of the cursor C at the item "I/O BASE ADDRESS", as shown in FIG. 22, the item specific help column in the screen makes the indication of the help information "SET I/O BASE ADDRESS FOR FIR." corresponding to the item"I/O BASE ADDRESS". In this indication condition, the operator operates the "-/Space" key to change the allocation matters on the FIR I/O base address, thus correcting the POST error resulting from the mistaken setting of the system resource allocation.

The serial port setting errors of 3) are, for example, from when the I/O base address the serial port B uses is assigned to the serial port A and when the I/O base address the serial port A uses is allocated to the serial port B. Incidentally, although only one serial port is illustrated in FIG. 2, the description here is made on the assumption that two serial ports A and B are put to use.

Such an error of 3) applies, for example, to a setting error of the I/O base address of the serial port A, the table shown in FIG. 3 is retrieved with the error code E3 for that error, thereby obtaining the BIOS setup screen code BSS4, the BIOS setup item code BSI3 and the error message code EM3. Further, the data corresponding to these codes BSS4, BSI3 and EM3 are derived from the displaying data storage section 26 to be placed on the display 15.

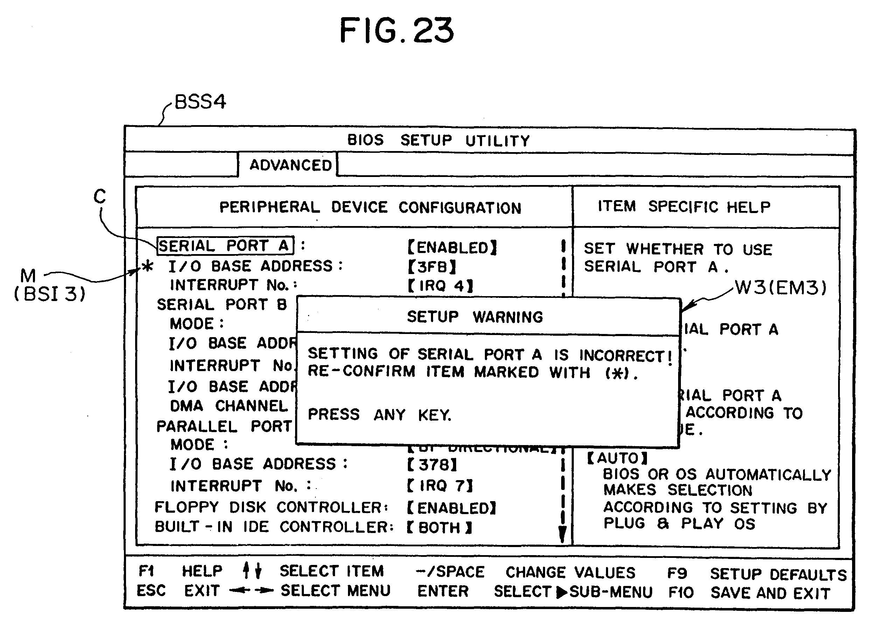

In this embodiment, as seen in FIG. 23, the base screen (peripheral device configuration menu screen) in FIG. 8 corresponding to the BIOS setup screen code BSS4 and containing the I/O base address of the serial port A as the BIOS setup item is read out to be displayed, and at the same time, the error message "SETTING OF SERIAL PORT A IS INCORRECT! RE-CONFIRM ITEM MARKED WITH [*] . PRESS ANY KEY." in FIG. 12 corresponding to the error code EM3 is indicated in a window W3 appearing at a nearly central portion of the base screen. Besides, on the base screen corresponding to the code BSS4, an asterisk mark M is put at a left end portion of the item corresponding to the BIOS setup item code BSI3, i.e., the item "I/O BASE ADDRESS" whose contents to be modified, which emphatically indicates the item "I/O BASE ADDRESS" regarding the error of 3).

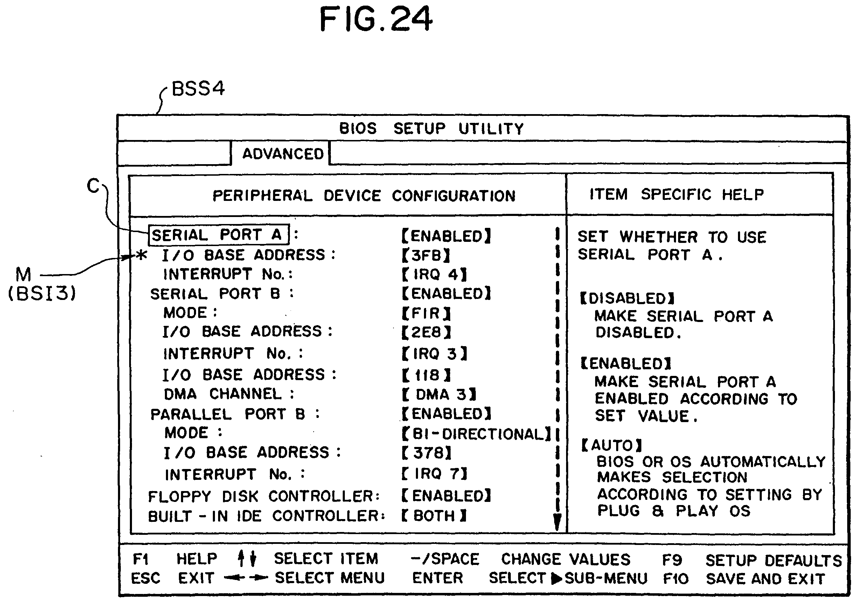

Referring to the BIOS setup screen shown in FIG. 23, the operator presses any key on the keyboard 12a in accordance with the setup warning in the window W3. When detecting the press of the key on the keyboard 12a (YES route from step S28 in FIG. 4), the setup function section 24 deletes the pop-up menu (error message) appearing in the window W3 (step S29 in FIG. 4), while making a display of the BIOS setup screen shown in FIG. 24.

At a point of time of the display of the screen shown in FIG. 23 or 24, the cursor C for the selection of the setup item is at the uppermost setup item "SERIAL PORT A", and in the item help column, the help information relating to the setup item "SERIAL PORT A", the cursor C stays, appears.

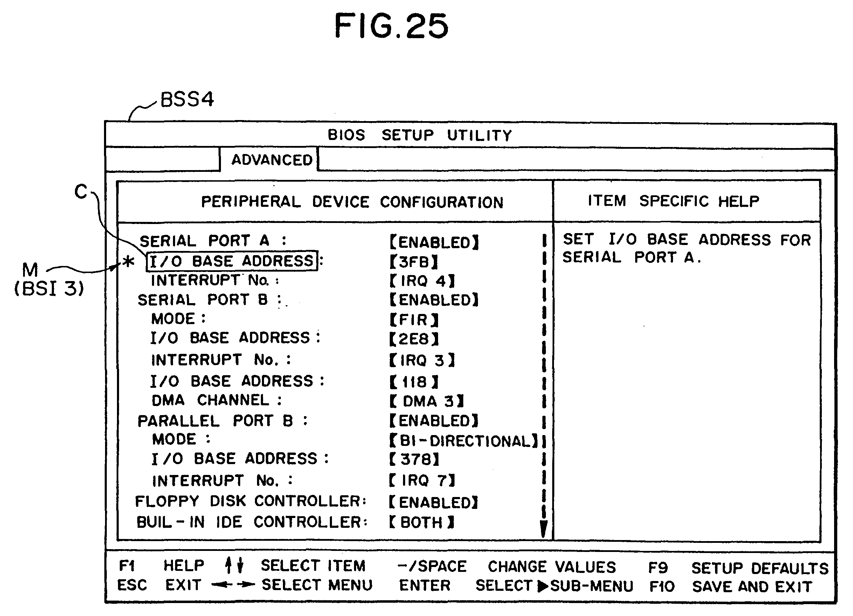

The operator presses the "↓" key while referring to the BIOS setup screen shown in FIG. 24 to move the cursor C to the position of the item "I/O BASE ADDRESS" with an asterisk mark M as shown in FIG. 25. When the cursor C arrives at the item "I/O BASE ADDRESS", as shown in FIG. 25, the item specific help column in the screen comes into the indication of the help information "SET I/O BASE ADDRESS FOR SERIAL PORT A." corresponding to that item "I/O BASE ADDRESS". In this indication condition, the operator operates the "-/Space" key to change the allocation matters of the I/O base address for the serial port A, so that the POST error caused by the mistaken setting of the I/O base address for the serial port A is eliminable.

Likewise, if the aforesaid error of 3) applies to, for example, a setting error of the I/O base address of the serial port B, the retrieval of the table 25 shown in FIG. 3 is made on the basis of the error code E4 for that error, thereby drawing the BIOS setup screen code BSS4, the BIOS setup item code BSI4 and the error message code EM4. Further, the data corresponding to these codes BSS4, BSI4 and EM4 are read out from the displaying data storage section 26 to be placed on the display 15.

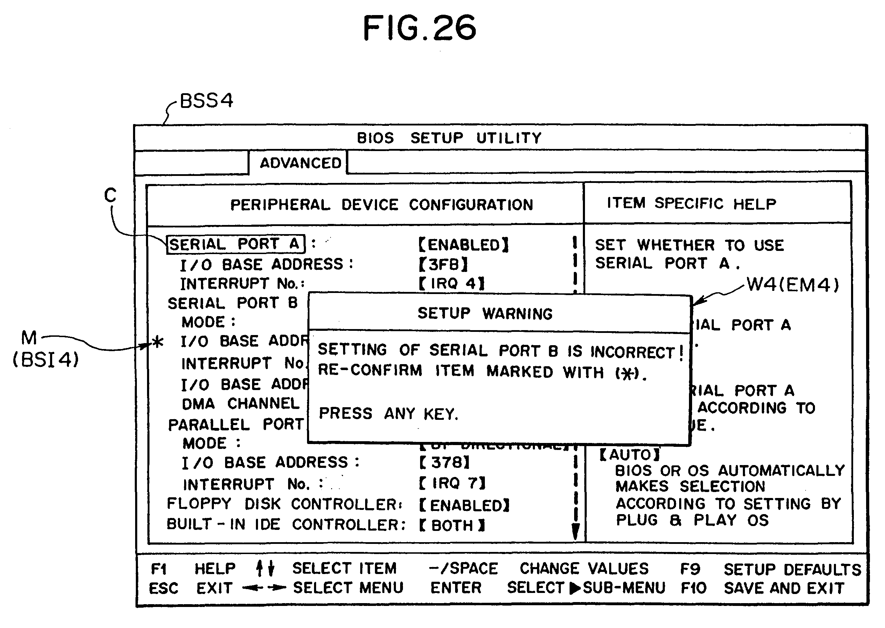

In this embodiment, as shown in FIG. 26, the base screen (peripheral device configuration menu screen) in FIG. 8 corresponding to the BIOS setup screen code BSS4 and including the I/O base address of the serial port B as the BIOS setup item is read out to be placed into display, and at the same time, the error message "SETTING OF SERIAL PORT B IS INCORRECT! RE-CONFIRM ITEM MARKED WITH [*]. PRESS ANY KEY." in FIG. 13 corresponding to the error message code EM4 appears in a window W4 positioned at a nearly central portion of the base screen. Additionally, on the base screen corresponding to the code BSS4, an asterisk mark M is placed at a left end portion of the BIOS setup item code BSI4 item, i.e., the item "I/O BASE ADDRESS" whose contents are to be changed, which contributes to emphatic indication of the item "I/O BASE ADDRESS" dependent on the error of 3).

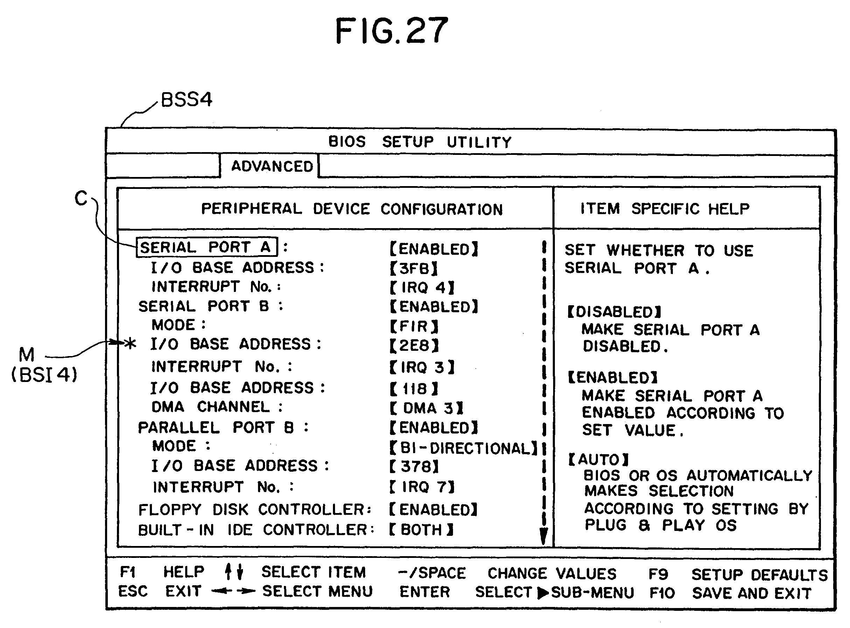

While referring to the BIOS setup screen shown in FIG. 26, the operator presses any key on the keyboard 12a in accordance with the setup warning in the window W4. When detecting the press of the key on the keyboard 12a (YES route from step S28 in FIG. 4), the setup function section 24 deletes the pop-up menu (error message) indicated in the form of the window W4 (step S29 in Fig. 4), and instead makes a display of the BIOS setup screen shown in FIG. 27.

At a point of time of the display of the screen shown in FIG. 26 and FIG. 27, the cursor C for the selection of the setup item is at the uppermost setup item "SERIAL PORT A", and in the item help column, the help information relating to the setup item "SERIAL PORT A", the cursor C stays, appears.

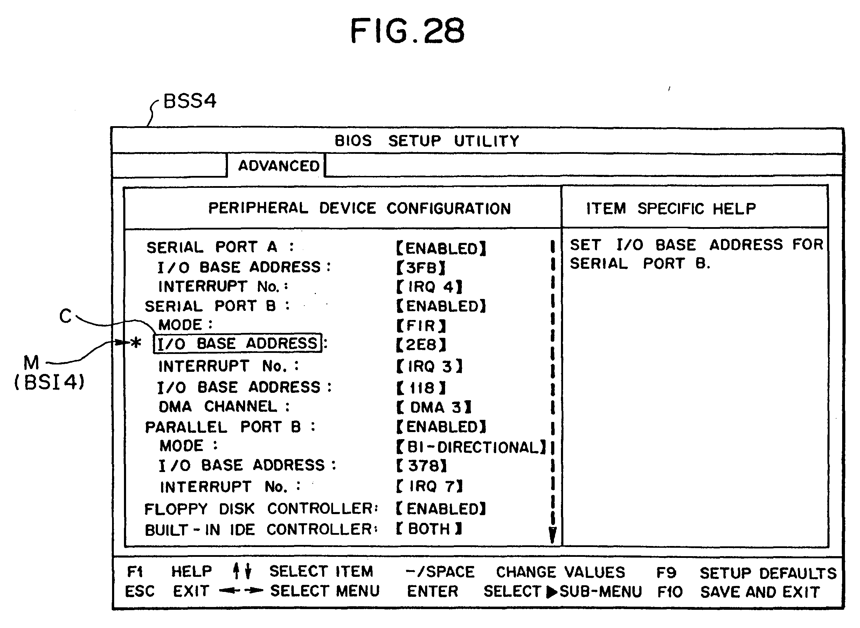

The operator presses the "↓" key while referring to the BIOS setup screen shown in FIG. 27 to move the cursor C to the position of the item "I/O BASE ADDRESS" with an asterisk mark M as shown in FIG. 28. When the cursor C arrives at the item "I/O BASE ADDRESS", as shown in FIG. 28, the item help column in the screen comes into the indication of the help information "SET I/O BASE ADDRESS OF SERIAL PORT B." corresponding to that item "I/O BASE ADDRESS". In this indication condition, the operator operates the "-/Space" key to change the allocation matters of the I/O base address for the serial port B, so that the POST error caused by the mistaken setting of the I/O base address for the serial port B is eliminable.

A parallel port setting error of 4) occurs, for example, when the DMA channel the sound device uses is allocated to the parallel port.

Such an error of 4) applies to, for example, a setting error of the I/O base address for the parallel port, the retrieval of the table 25 shown in FIG. 3 is made on the basis of the error code E5 equivalent to that error to obtain the BIOS setup screen code BSS4, the BIOS setup item code BSI5 and the error message code EM 5. Following this, the data corresponding to these codes BSS4, BSI5 and EM5 are derived from the displaying data storage section 26 to come out on the display 15.

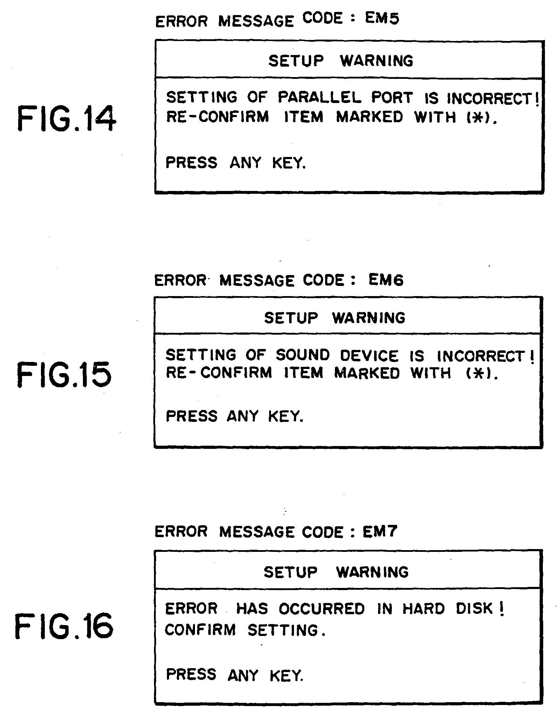

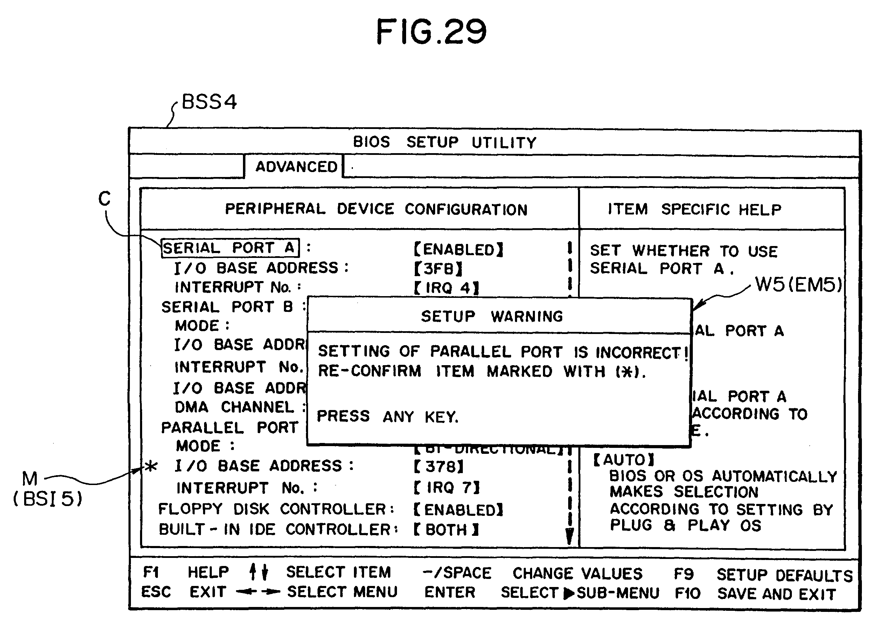

In this embodiment, as shown in FIG. 29, the base screen (peripheral device configuration menu screen) in FIG. 8 corresponding to the BIOS setup screen code BSS4 and including the I/O base address for the parallel port as the BIOS setup item is read out to be put to display, and at the same time, the error message "SETTING OF PARALLEL PORT IS INCORRECT! RE-CONFIRM ITEM MARKED WITH [*]. PRESS ANY KEY." in FIG. 14 corresponding to the error message code EM5 appears in a window W5 positioned at a nearly central portion of the base screen. Additionally, on the base screen corresponding to the code BSS4, an asterisk mark M is placed at a left end portion of the BIOS setup item code BSI5 item, i.e., the item "I/O BASE ADDRESS" whose contents are to be changed, which contributes to emphatic indication of the item "I/O BASE ADDRESS" dependent on the error of 4).

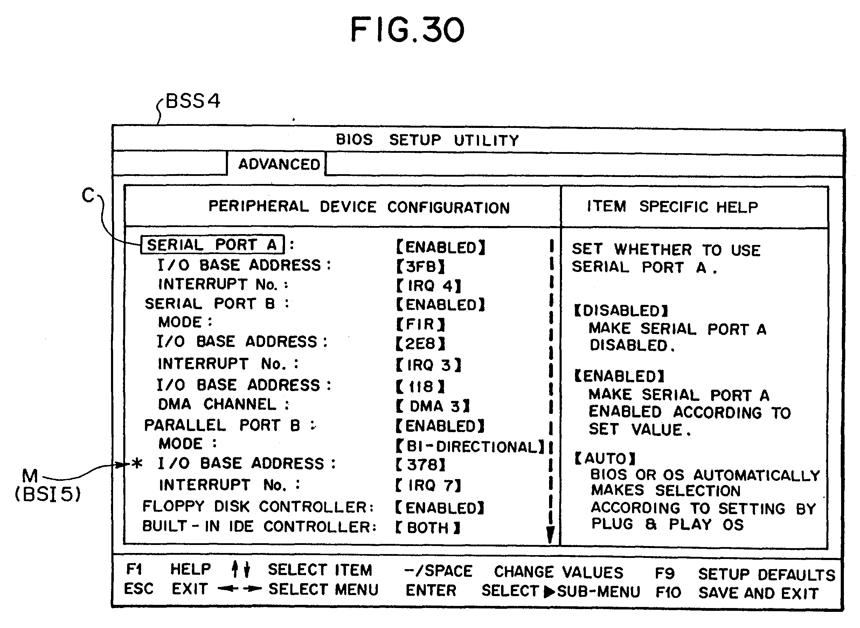

While referring to the BIOS setup screen shown in FIG. 29, the operator presses any key on the keyboard 12a in accordance with the setup warning in the window W5. When detecting the press of the key on the keyboard 12a (YES route from step S28 in FIG. 4), the setup function section 24 deletes the pop-up menu (error message) indicated in the form of the window W5 (step S29 in Fig. 4), and instead makes a display of the BIOS setup screen shown in FIG. 30.

At a point of time of the display of the screen shown in FIG. 29 or 30, the cursor C for the selection of the setup item is at the uppermost setup item "SERIAL PORT A", and in the item specific help column, the help information relating to the setup item "SERIAL PORT A", the cursor C stays, appears.

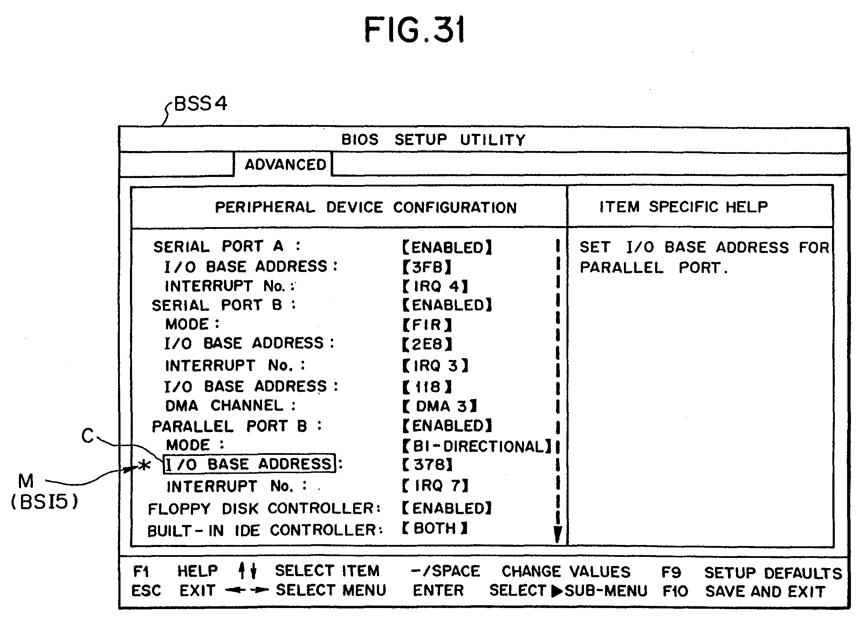

The operator presses the "↓" key while referring to the BIOS setup screen shown in FIG. 30 to move the cursor C to the position of the item "I/O BASE ADDRESS" with an asterisk mark M as shown in FIG. 31. When the cursor C reaches the item "I/O BASE ADERESS", as shown in FIG. 31, the item help column in the screen comes into the indication of the help information "SET I/O BASE ADDRESS FOR PARALLEL PORT." corresponding to that item "I/O BASE ADDRESS". In this indication condition, the operator operates the "-/Space" key to change the allocation matters of the I/O base address for the parallel port, so that the POST error caused by the erroneous setting for the I/O base address for the parallel port is eliminable.

A sound device setting error of 5) occurs, for example, when the DMA channel the parallel port uses is assigned to the sound device.

In the case that such an error of 5) applies to, for example, a setting error of the DMA channel, the retrieval of the table 25 shown in FIG. 3 is made with the error code E6 equivalent to that error to obtain the BIOS setup screen code BSS5, the BIOS setup item code BSI6 and the error message code EM6. Following this, the data corresponding to these codes BSS5, BSI6 and EM6 are derived from the displaying data storage section 26 to come out on the display 15.

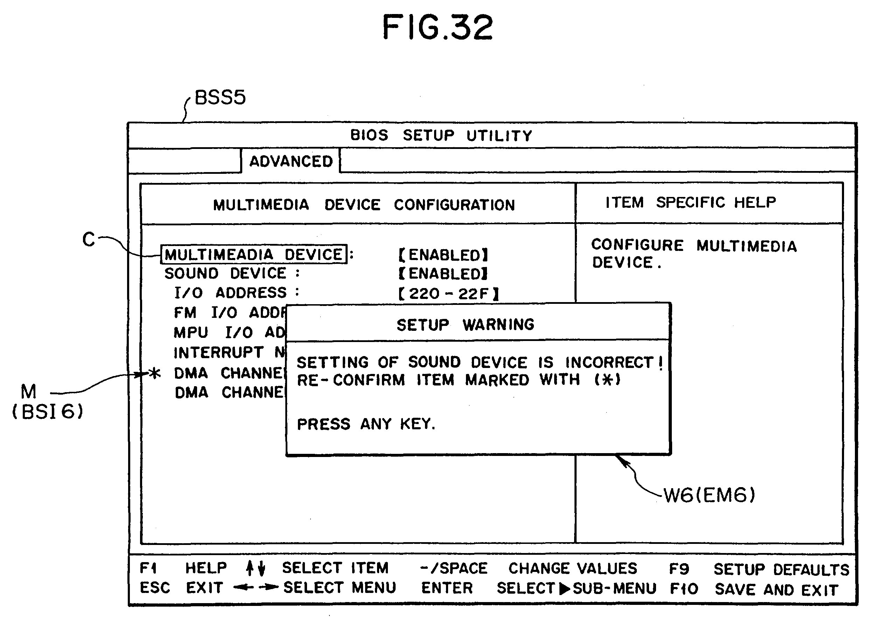

In this embodiment, as shown in FIG. 32, the base screen (multimedia configuration menu screen) in FIG. 9 corresponding to the BIOS setup screen code BSS5 and including the DMA channel of the sound device as the BIOS setup item is read out to be displayed, and at the same time, the error message "SETTING OF SOUND DEVICE IS INCORRECT! RE-CONFIRM ITEM MARKED WITH [*]. PRESS CERTAIN KEY." in FIG. 15 corresponding to the error message code EM6 appears in a window W6 positioned at a nearly central portion of the base screen. Additionally, on the base screen corresponding to the code BSS5, an asterisk mark M is placed at a left end portion of the BIOS setup item code BSI6 item, i.e., the item "DMA CHANNEL" whose contents are to be changed, which contributes to emphatic indication of the item "DMA CHANNEL" dependent on the error of 5).

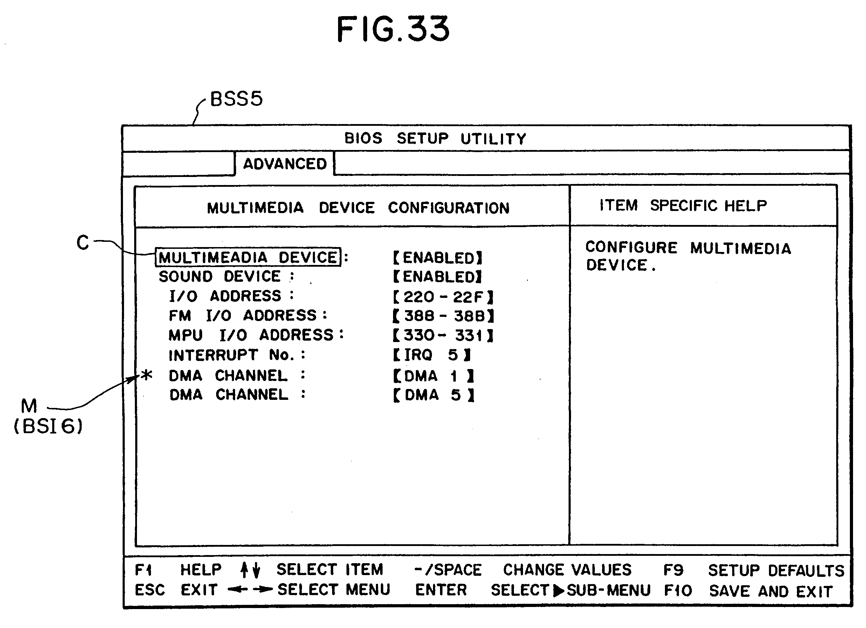

Referring to the BIOS setup screen shown in FIG. 32, the operator presses any key on the keyboard 12a in accordance with the setup warning in the window W6. When detecting the press of the key on the keyboard 12a (YES route from step S28 in FIG. 4), the setup function section 24 deletes the pop-up menu (error message) indicated in the window W6 (step S29 in Fig. 4), and instead makes a display of the BIOS setup screen shown in FIG. 33.

At a point of time of the display of the screen shown in FIG. 32 or 33, the cursor C for the selection of the setup item is at the uppermost setup item "MULTIMEDIA DEVICE", and in the item specific help column, the help information "CONFIGURE MULTIMEDIA DEVICE." relating to the setup item "MULTIMEDIA DEVICE", the cursor C stays, appears.

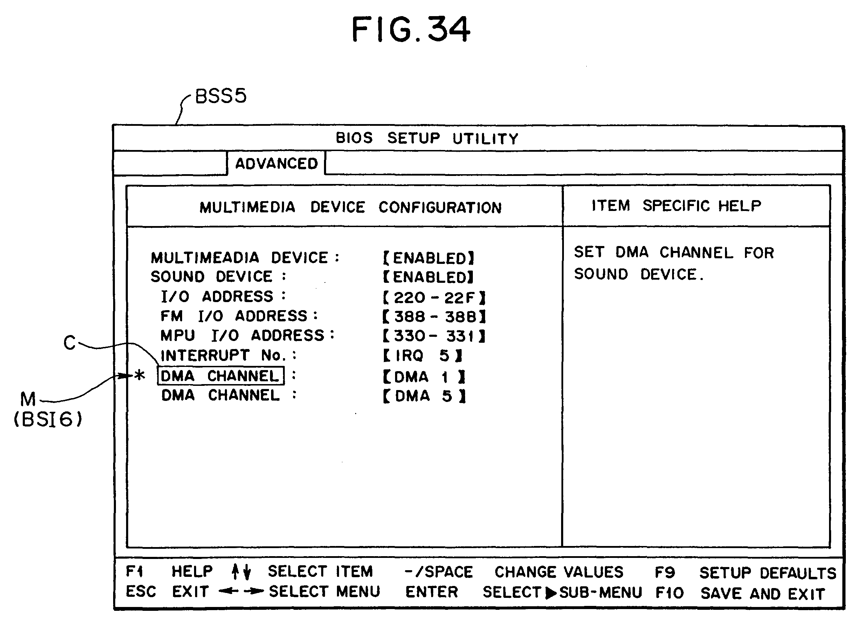

The operator presses the "↓" key while referring to the BIOS setup screen shown in FIG. 33 to move the cursor C to the position of the item "DMA CHANNEL" with an asterisk mark M as shown in FIG. 34. When the cursor C reaches the item "DMA CHANNEL", as shown in FIG. 34, the item specific help column in the screen comes into the indication of the help information "SET DMA CHANNEL FOR SOUND DEVICE." corresponding to that item "DMA CHANNEL". In this indication condition, the operator operates the "-/Space" key to change the allocation matters of the DMA channel for the sound device, so that the POST error caused by the erroneous setting of the DMA channel for the sound device is eliminable.

Hard disk errors of 6) are due to physical troubles of the hard disk, or errors of the setting matters depending on the BIOS setup mentioned before with reference to FIGs. 38 to 42.

In the case of the occurrence of such an error of 6), the retrieval of the table 25 shown in FIG. 3 is made with the error code E7 equivalent to that error to obtain the BIOS setup screen code BSS2, the BIOS setup item code BSI7 and the error message code EM 7. Following this, the data corresponding to these codes BSS2, BSI7 and EM7 are derived from the displaying data storage section 26 to be indicated on the display 15.

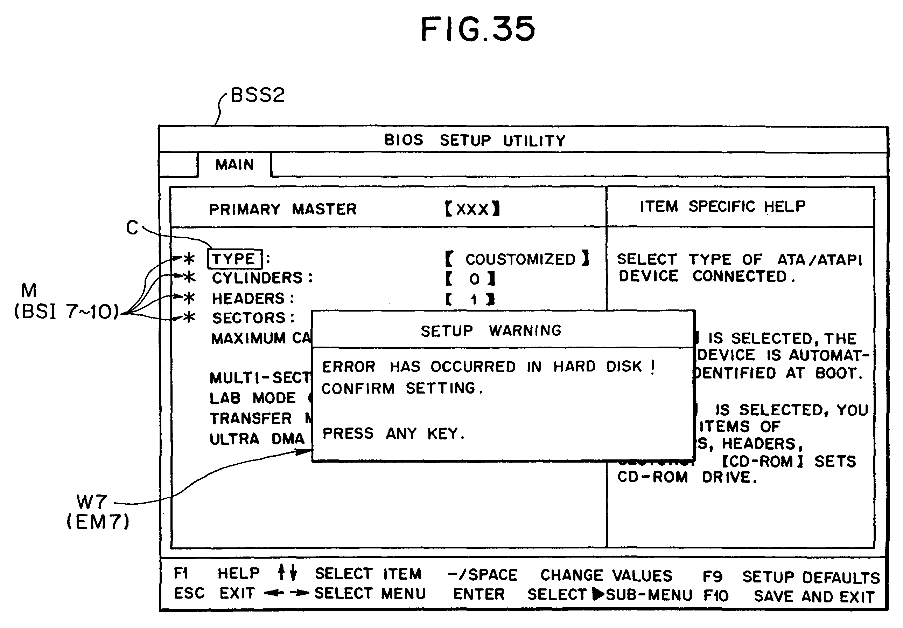

In this embodiment, as shown in FIG. 35, the base screen (primary master menu screen) in FIG. 6 corresponding to the BIOS setup screen code BSS2 and including the setting matters of the hard disk as the BIOS setup item is read out to be displayed, and concurrently, the error message "ERROR HAS OCCURRED IN HARD DISK! CONFIRM SETTING. PRESS ANY." in FIG. 16 corresponding to the error message code EM7 appears in a window W7 positioned at a nearly central portion of the base screen. In addition, on the base screen corresponding to the code BSS2, asterisk marks M are placed at left end portions of the items corresponding to the BIOS setup item codes BSI7 to BSI10, i.e., the items "TYPE", "CYLINDERS", "HEADERS" and "SECTORS" whose contents are to be changed, which performs emphatic indication of the four items concerning the error of 6).

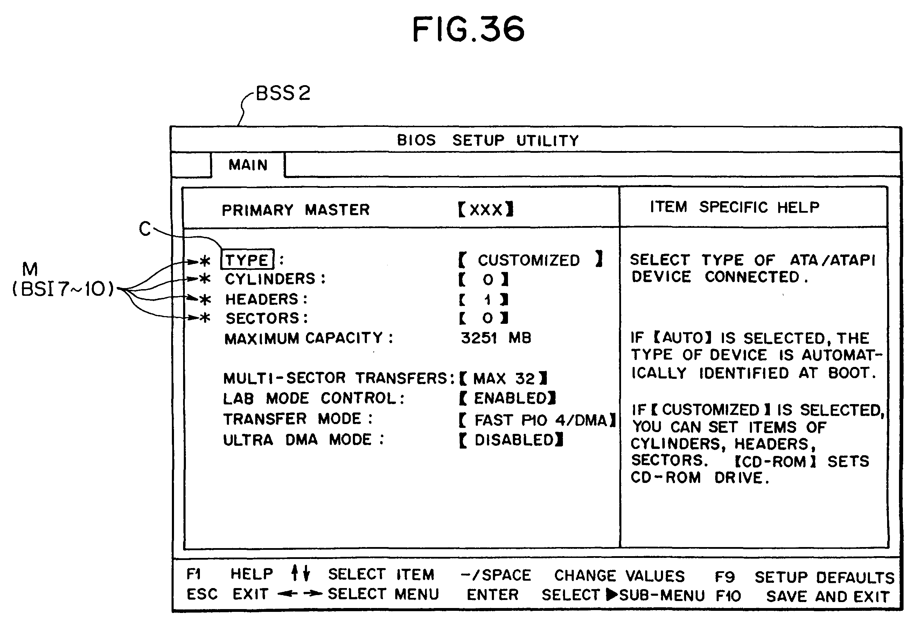

Referring to the BIOS setup screen shown in FIG. 35, the operator presses any key on the keyboard 12a in accordance with the setup warning in the window W7. When detecting the press of the key on the keyboard 12a (YES route from step S28 in FIG. 4), the setup function section 24 deletes the pop-up menu (error message) in the window W7 (step S29 in Fig. 4), while making a display of the BIOS setup screen shown in FIG. 36.

At a point of time of the display of the screen shown in FIG. 35 or 36, the cursor C for the selection of the setup item is at the uppermost setup item "TYPE", and in the item help column, the help information relating to the setup item "TYPE", where the cursor C stays, appears.

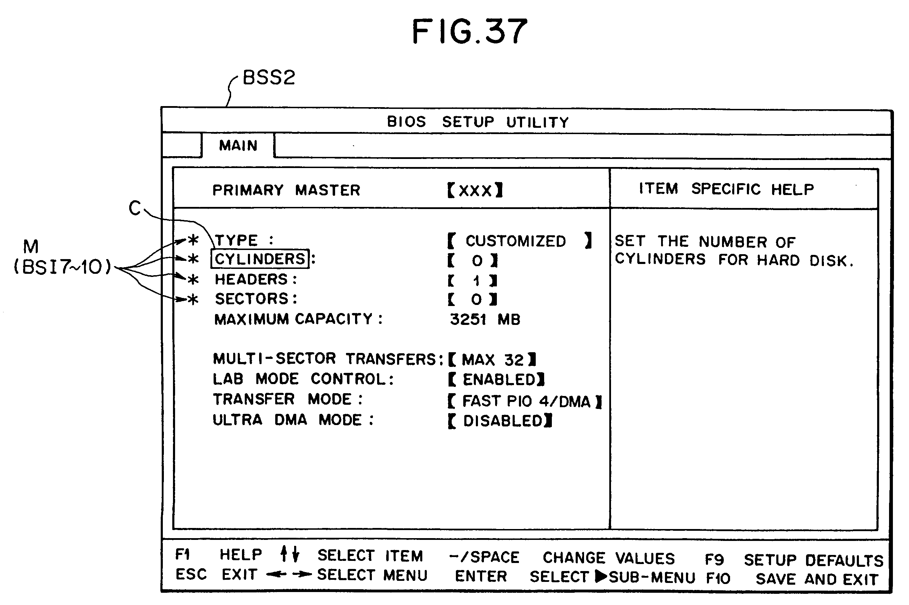

Referring to the BIOS setup screen shown in FIG. 36, the operator presses the "↓" key when recognizing the fact that the number of cylinders is set to "0" irrespective of the type being set to "CUSTOMIZED" to move the cursor C to the position of the item "CYLINDERS" being one of the items marked with the asterisk M as shown in FIG. 37. When the cursor C reaches the item "CYLINDERS", as shown in FIG. 37, the item specific help column in the screen comes into the indication of the help information "SET THE NUMBER OF CYLINDERS FOR HARD DISK." corresponding to that item "CYLINDERS". In this indication condition, the operator operates the "-/Space" key to change the setting matters of the number of cylinders, so that the POST error caused by the erroneous setting matters of the hard disk is eliminable.

Furthermore, as shown in FIG. 4, on recognizing an input for a setting change of the aforesaid BIOS setup item (YES route from step S30), the setup function section 24 first performs the setting change (step S31) and then makes the POST function section 22 again implement the check (step S15). The error analysis function section 23 analyzes the diagnosis result obtained by this POST function section 22, and if the POST error disappears (NO route from step S16), makes the computer system 10 start up (step S17).

Heretofore, in the case of the occurrence of the errors of 2) to 5), the operator has been required to perform the switching from the self test screen to the BIOS setup for once making a display of the main menu screen shown in FIG. 5, and subsequently, to grasp the error information appearing in the self test screen and to perform the switching from the main menu to the detailed menu screen shown in FIG. 7 for choosing the peripheral device configuration (errors of 2) to 4)) or the multimedia configuration (errors of 5)) on this detailed menu screen, and then to conduct the switching to the peripheral device configuration menu screen of FIG. 8 or the multimedia configuration menu screen of FIG. 9.

In contrast to this, according to the embodiment of this invention, for the occurrence of a POST error correctable through the BIOS setup, a BIOS setup screen (see FIGs. 17, 20, 23, 26, 29, 32 and 35) for a change of the setting matters for the elimination of that error automatically appears, and moreover, an error message [pop-up menu (see FIGs. 10 to 16); detail of error or contents to be changed] automatically comes out in the same BIOS setup screen for the communication to the user.

Accordingly, the operator (user) of the computer system 10 can easily specify the factors (matters to be modified) in the occurrence of the POST error to appropriately and readily change the hardware configuration or the system resource in accordance with that POST error, thus quickly and properly eliminating the POST error.

In addition, a screen including the BIOS setup item corresponding to the contents to be changed for the error elimination is displayed as the BIOS setup screen, and therefore, the user, referring to the pop-up menu, can immediately set or change the corresponding setup item on that BIOS setup screen, which allows quicker elimination of the POST error.

What's better, now that the BIOS setup item to be changed is emphatically indicated in the BIOS setup screen, even if various kinds of items exist in the BIOS setup screen, the user can immediately visually specify the BIOS setup item to be changed, which contributes to further speed-up of the elimination of the POST error.

What's more, according to this embodiment, since the correspondence between the POST error eliminable through the BIOS setup, and the pop-up menu (error message regarding the POST error), the BIOS setup screen and the BIOS setup item is set in advance in the form of the table 25, through the use of this table 25, the control function section 24 can easily and quickly determine the BIOS setup screen to be displayed, the BIOS setup item to be indicated emphatically and the pop-up menu being indicated on the BIOS setup screen on the basis of the POST error. Accordingly, it is possible to quickly control the displaying condition of the display 15 in correspondence with the POST error, and to quickly inform the user of the pop-up menu and others, thus contributing to further speed-up of the error elimination.

It should be understood that the present invention is not limited to the above-described embodiment, and that it is intended to cover all changes and modifications of the embodiment of the invention herein which do not constitute departures from the spirit and scope of the invention.

For instance, although, in the above-described embodiment, the emphatic indication of the BIOS setup item is done by placing an asterisk mark (*), other embodiments of the invention are not limited to this, since it is also appropriate that the emphatic indication of the BIOS setup item may be made in a way of a high-luminance indication, color-changing indication or the like.

Although the above description has referred to a program stored on a computer-readable medium, it will be appreciated that a computer program embodying the present invention need not be stored on a computer-readable medium and could, for example, be embodied in a signal such as a downloadable data signal provided from an Internet website. The appended claims are to be interpreted as covering a computer program by itself, or as a record on a carrier, or as a signal, or in any other form.

## Claims

1. An error handling method for use in an information processing system (10) for dealing with an error, which is detected through a power on self test of said information processing system (10), through the use of a setup function of said information processing system, characterised by comprising the steps of:
analyzing said error detected through said power on self test; and
in response to the error detection, displaying a setup screen for changing contents to be changed for elimination of said error on a displaying section (15) of said information processing system (10).

2. An error handling method for use in an information processing system as defined in claim 1, characterised in that, in the case of said error being eliminable through the use of said setup function, said setup screen for the elimination of said error is put on said displaying section (15) of said information processing system (10).

3. An error handling method for use in an information processing system as defined in claim 1 or 2, characterised in that details of said error and contents to be changed for the elimination of said error are informed as error information through said setup screen.

4. An error handling method for use in an information processing system as defined in any one of claims 1 to 3, characterised in that a screen including a setup item corresponding to the contents to be changed for the elimination of said error is displayed as said setup screen.

5. An error handling method for use in an information processing system as defined in claim 4, characterised in that said setup item is emphatically indicated in said setup screen.

6. An error handling method for use in an information processing system as defined in any one of claims 1 to 5, characterised in that a correspondence between an error possibly detected by said power on self test and a setup screen for changing contents to be changed for eliminating said error are set in advance in said information processing system (10) and, on the basis of said correspondence therebetween, said setup screen for changing the contents to be changed for the elimination of said error is displayed on said displaying section (15) of said information processing system (10).

7. An error handling method for use in an information processing system as defined in any one of claims 1 to 5, characterised in that a correspondence between an error possibly detected by said power on self test and a setup item for changing contents to be changed for eliminating said error are set in advance in said information processing system (10) and, on the basis of said correspondence therebetween, said setup item for changing the contents to be changed for the elimination of said error is displayed on said displaying section (15) of said information processing system (10).

8. An error handling method for use in an information processing system as defined in claim 6 or 7, characterised in that error message information corresponding to said error is set in advance in said information processing system (10), and said error message information is indicated on said displaying section (15) of said information processing system (10).

9. An error handling method for use in an information processing system as defined in any one of claims 1 to 5, characterised in that a correspondence between, of errors possibly detected by said power on self test, an error eliminable through the use of said setup function and error information including details of said error and the contents to be changed for eliminating the error is set in advance in said information processing system (10), and said error information to be informed through said setup screen is determined on the basis of the correspondence.

10. An error handling method for use in an information processing system as defined in any one of claims 1 to 9, characterised in that a basic input output program of said information processing system (10) is employed as said setup function.

11. An information processing system characterised by comprising a control section (24) which, when a power on self test detects an error, starts a setup function to display a setup screen on a displaying picture plane (15a) of a displaying section (15) for changing contents to be changed for eliminating said error.

12. An information processing system as defined in claim 11, characterised in that, in the case that said error is eliminable through the use of said setup function, said control section (24) executes control so that said setup screen for the elimination of said error appears in said displaying section (15).

13. An information processing system as defined in claim 11 or 12, characterised in that said control section (24) executes control so that details of said error and the contents to be changed for the elimination of said error are informed communicated as error information through said setup screen.

14. An information processing system as defined in any one of claims 11 to 13, characterised in that said control section (24) executes control so that a screen including a setup item corresponding to the contents to be changed for the elimination of said error is displayed as said setup screen.

15. An information processing system as defined in claim 14, characterised in that the control section (24) executes control to emphatically make a display of said setup item in said setup screen.

16. An information processing system as defined in any one of claims 11 to 15, characterised in that a storage section (25) is provided which previously stores a correspondence between an error possibly detected by said power on self test and a setup screen for changing contents to be changed for the elimination of said error, and on the basis of said correspondence stored in said storage section (25), said control section (24) makes said displaying section (15) display said setup screen for changing the contents to be changed for the elimination of said error.

17. An information processing system as defined in any one of claims 11 to 15, characterised in that a storage section (25) is provided which previously stores a correspondence between an error possibly detected by said power on self test and a setup item for changing contents to be changed for the elimination of said error, and on the basis of said correspondence stored in said storage section (25), said control section (24) makes said displaying section (15) display said setup item for changing the contents to be changed for the elimination of said error.

18. An information processing system as defined in claim 16 or 17, characterised in that said storage section (25) retains error message information corresponding to said error, while said control section (24) makes said displaying section (15) display said error message information.

19. An information processing system as defined in any one of claims 11 to 15, characterised in that a storage section (25) is provided which previously stores a correspondence between, of errors possibly detected by said power on self test, an error eliminable through the use of said setup function and error information including details of said error and contents to be changed for elimination of said error, while said control section (24) determines error information to be informed through said setup screen on the basis of the correspondence stored in said storage section (25).

20. An information processing system comprising said setup function as defined in any one of claims 11 to 19, characterised by including said displaying section (15).

21. An information processing system as defined in any one of claims 11 to 20, wherein a basic input output program serves as said setup function.

22. A control unit for use in an information processing system (10) including a power on self test and a setup function, characterised by comprising a control section (24) which, when said power on self test detects an error, starts said setup function to display a setup screen for changing contents to be changed for elimination of said error in a displaying picture plane (15a) of a displaying section (15) of said information processing system (10).

23. A control unit as defined in claim 22, characterised in that, if said error is eliminable through the use of said setup function, said control section (24) executes control so that said setup screen for the elimination of said error is displayed on said displaying section (15) of said information processing system (10).

24. A control unit as defined in claim 22 or 23, characterised in that said control section (24) executes control so that details of said error and the contents to be changed for the elimination of said error are informed as error information through said setup screen.

25. A control unit as defined in any one of claims 22 to 24, characterised in that said control section (24) executes control so that a screen including a setup item corresponding to the contents to be changed for the elimination of said error is displayed as the setup screen.

26. A control unit as defined in claim 25, characterised in that said control section (24) executes control to emphatically indicate said setup item in said setup screen.

27. A control unit as defined in any one of claims 22 to 26, characterised in that a storage section (25) is provided which previously stores a correspondence between an error possibly detected by said power on self test and a setup screen for changing contents to be changed for the elimination of said error, while on the basis of the correspondence stored in said storage section (25), said control section (24) makes said displaying section (15) of said information processing system (10) display said setup screen for changing the contents to be changed for the elimination of said error.

28. A control unit as defined in any one of claims 22 to 26, characterised in that a storage section (25) is provided which previously stores a correspondence between an error possibly detected by said power on self test and a setup item for changing contents to be changed for the elimination of said error, while on the basis of the correspondence stored in said storage section (25), said control section (24) makes said displaying section (15) of said information processing system (10) display said setup item for changing the contents to be changed for the elimination of said error.

29. A control unit as defined in claim 27 or 28, characterised in that said storage section (25) retains error message information corresponding to said error, while said control section (24) makes said displaying section (15) of said information processing system (10) indicate said error message information.

30. A control unit as defined in any one of claims 22 to 26, characterised in that a storage section (25) is provided which previously stores a correspondence between, of errors possibly detected by said power on self test, an error eliminable through the use of said setup function and error information including details of said error and the contents to be changed for the elimination of said error, while said control section (24) determines said error information to be informed through said setup screen on the basis of the correspondence stored in said storage section (25).

31. A control unit as defined in any one of claims 22 to 30, characterised in that a basic input output program of said information processing system (10) is employed as said setup function.

32. A program-stored computer readable record medium storing a program for making a computer (10) execute a setup function and a power on self test, characterised in that said program making said computer (10) serve as a control section (24) for starting said setup function in accordance with an error detected by said power on self test to display a setup screen for changing contents to be changed for elimination of said error in a displaying picture plane (15a) of a displaying section (15).

33. A program-stored computer readable record medium as defined in claim 32, characterised in that, in the case that said error is eliminable through the use of said setup function, when making said computer (10) serve as said control section (24), said program makes said displaying section (15) display said setup screen for the elimination of said error.

34. A program-stored computer readable record medium as defined in claim 32 or 33, characterised in that, when making said computer (10) serve as said control section (24), said program operates so that details of said error and contents to be changed for the elimination of said error are informed as error information through said setup screen.

35. A program-stored computer readable record medium as defined in any one of claims 32 to 34, characterised in that, when making said computer (10) serve as the control section (24), said program operates so that a screen including a setup item corresponding to the contents to be changed for the elimination of said error is displayed as said setup screen.

36. A program-stored computer readable record medium as defined in claim 35, characterised in that said program operates so that said setup item is emphatically indicated in said setup screen.

37. A program-stored computer readable record medium as defined in any one of claims 32 to 36, characterised in that said program includes a storage section (25) for previously storing a correspondence between an error possibly detected by said power on self test and a setup screen for changing contents to be changed for the elimination of said error, while, when making said computer (10) serve as said control section (24), said program makes said displaying section (15) display said setup screen for changing the contents to be changed for the elimination of said error on the basis of the correspondence stored in said storage section (25).

38. A program-stored computer readable record medium as defined in any one of claims 32 to 36, characterised in that said program includes a storage section (25) for previously storing a correspondence between an error possibly detected by said power on self test and a setup item for changing contents to be changed for the elimination of said error, while, when making said computer (10) serve as said control section (24), said program makes said displaying section (15) display said setup item for changing the contents to be changed for the elimination of said error on the basis of the correspondence stored in said storage section (25).

39. A program-stored computer readable record medium as defined in claim 37 or 38, characterised in that said storage section (25) stores error message information corresponding to said error, while, when making said computer (10) serve as said control section (24), said program makes said computer (10) refer to said storage section (25) to determine said error message information to be displayed on said displaying section (15).

40. A program-stored computer readable record medium as defined in any one of claims 32 to 36, characterised in that said program includes a storage section (25) for previously storing a correspondence between, of errors possibly detected by said power on self test, an error eliminable through the use of said setup function and error information including details of said error and the contents to be changed for the elimination of said error, while, when making said computer (10) serve as said control section (24), said program makes said computer (10) determine said error information to be informed through said setup screen on the basis of the correspondence stored on said storage section (25).

41. A program-stored computer readable record medium as defined in any one of claims 32 to 40, characterised in that a basic input output program is employed as said setup function.

42. A computer program which, when run on a computer, causes the computer to carry out a method as claimed in any one of claims 1 to 10.

43. A computer program which, when loaded into a computer, causes the computer to become an information processing system as claimed in any one of claims 11 to 21.

44. A computer program which, when loaded into a computer, causes the computer to be provided with a control unit as claimed in any one of claims 22 to 31.
